# EUROPEAN PATENT SPECIFICATION

(11) **EP 3 468 088 B1**
(45) Date of publication and mention of the grant of the patent: **02.02.2022**
(21) Application number: 17823595.8
(22) Date of filing: 03.07.2017
(51) Int. Cl.: H04L 5/00, H04L 27/26

(54) **TRANSMISSION METHOD, USER EQUIPMENT AND BASE STATION**
ÜBERTRAGUNGSVERFAHREN, BENUTZERGERÄT UND BASISSTATION
PROCÉDÉ DE TRANSMISSION, ÉQUIPEMENT D'UTILISATEUR ET STATION DE BASE

(30) Priority: 06.07.2016 CN 201610528423
(43) Date of publication of application: 10.04.2019
(73) Proprietor: Huawei Technologies Co., Ltd., Longgang District Shenzhen, Guangdong 518129 (CN)
(72) Inventor: LI, Hua, Shenzhen Guangdong 518129 (CN); LI, Zhongfeng, Shenzhen Guangdong 518129 (CN); QIN, Yi, Shenzhen Guangdong 518129 (CN)
(74) Representative: Gill Jennings & Every LLP
(86) International application number: PCT/CN2017/091533
(87) International publication number: WO 2018/006783

(56) References cited:
- WO-A1-2014/168438
- CN-A- 102 035 633
- CN-A- 102 036 291
- CN-A- 102 461 034
- US-A1- 2014 098 780
- LG ELECTRONICS: "Design issues on PUCCH for MTC UE", 3GPP DRAFT; R1-151491_PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934363, Retrieved from the Internet: URL:http://www.3gpp.org/ftp/Meetings_3GPP_ SYNC/RAN1/Docs/ [retrieved on 2015-04-19]
- ERICSSON ET AL: "NB LTE - Concept Description L1", 3GPP DRAFT; RP-151397 - NB-LTE - CONCEPT DESCRIPTION L1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Phoenix, Arizona, USA; 20150914 - 20150916 8 September 2015 (2015-09-08), XP051653258, Retrieved from the Internet: URL:http://www.3gpp.org/ftp/tsg%5Fran/TSG% 5FRAN/TSGR%5F69/Docs/RP%2D151397%2Ezip [retrieved on 2015-09-08]

## Description

### TECHNICAL FIELD

The present invention relates to the field of communications technologies, and in particular, to a transmission method, user equipment, and a base station.

### BACKGROUND

In a Long Term Evolution LTE system, one TTI includes 14 symbols for a normal cyclic prefix CP length; and one TTI includes 12 symbols for an extended CP length. When user equipment UE sends uplink data to a base station on a physical uplink control channel PUCCH, the PUCCH is designed based on 14 symbols or 12 symbols.

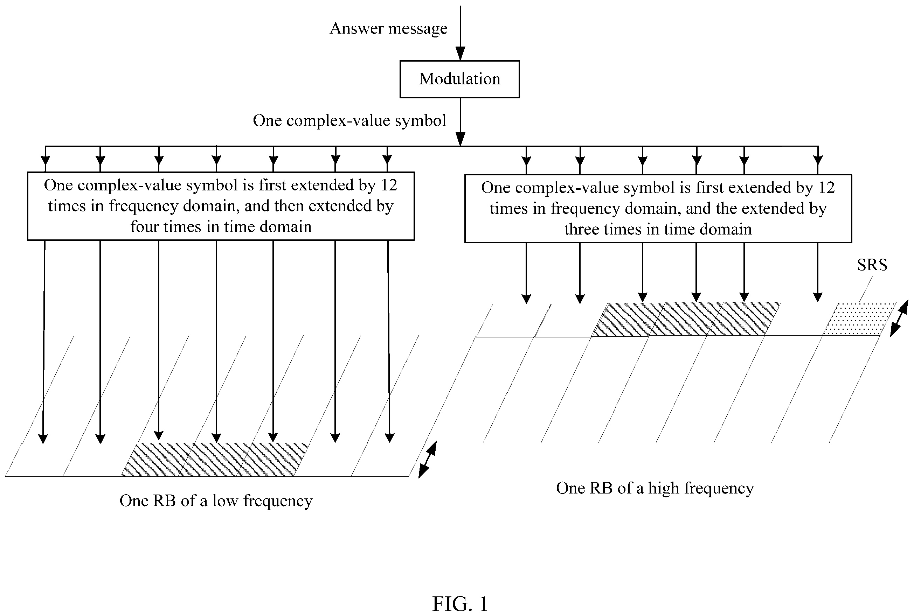

For example, when an uplink channel is sent, in an example in which one TTI includes 14 symbols for the normal CP length, a sounding reference signal SRS is sent in a last symbol of the 14 symbols, and the UE has 13 symbols for sending the PUCCH. An answer message is modulated into a complex-value symbol. As shown in FIG. 1, in 13 available symbols, three symbols in the middle of first seven symbols are used as symbols for sending a reference signal, and the other four symbols are symbols for sending data. One complex-value symbol is first extended by 12 times in frequency domain, then extended by four times in time domain, and mapped onto one resource block in a low frequency band. In last six symbols, three symbols are used as symbols for sending a reference signal and the other three symbols are used as symbols for sending data. One complex-value symbol is first extended by 12 times in frequency domain, then extended by three times in time domain, and mapped onto one resource block in a high frequency band. For the extended CP length, 11 symbols of the 12 symbols are used for sending uplink data.

However, with rapid development of communications technologies, a new transmission time unit emerges, and a quantity of symbols in a time unit also changes. In addition, due to application of a massive antenna technology, a quantity of symbols for sending an SRS increases, and a quantity of symbols for sending an uplink channel decreases. Therefore, when the UE sends the uplink channel, a quantity of symbols that can be used to send the uplink channel in one unit time decreases, and therefore, the UE needs to consider an uplink channel format for a smaller quantity of symbols.

"Design issues on PUCCH for MTC UE", LG Electronics, 3GPP Draft; R1-151491, 3rd Generation Partnership Project (3GPP), vol. RAN WG1, (2015-04-19) discloses a mapping configuration whereby a PUCCH region for MTC UEs are independently configured, involving a PUCCH region being overlapped with SRS transmission regions.

### SUMMARY

The invention is defined by the independent claims. Embodiments are defined in the dependent claims.

Embodiments of the present invention provide a transmission method, user equipment, and a base station, so that the user equipment can transmit information on an uplink channel with any quantity of symbols.

To achieve the foregoing objective, the embodiments of the present invention use the following technical solutions:
According to a first aspect, a transmission method is provided, and applied to user equipment UE. The method includes: mapping, by the UE, W complex-value symbols of an uplink channel onto a resource area 1 of the UE, where the resource area 1 of the UE includes F discrete or contiguous subcarriers in Y symbols; mapping a reference signal corresponding to the uplink channel onto a resource area 2 of the UE, where the resource area 2 includes D discrete or contiguous subcarriers in C symbols; and sending, by the UE, signals of the resource area 1 and the resource area 2 wherein before the mapping W complex-value symbols onto a resource area 1 of the UE, the method further includes: determining, from K symbols in one transmission time unit, Y symbols for transmitting data and C symbols for transmitting the reference signal, where the K symbols are symbols used for transmitting data and the reference signal in one transmission time unit, and Y + C ≤ K; and determining the resource area 1 of the UE and the resource area 2 of the UE based on the configuration information.

According to a second aspect, a transmission method is provided, and applied to a base station. The method includes: receiving signals of a resource area 1 and a resource area 2 sent by user equipment UE, where a signal of the resource area 1 includes W complex-value symbols of an uplink channel, a signal of the resource area 2 includes a reference signal corresponding to the uplink channel, the resource area 1 of the UE includes F discrete or contiguous subcarriers in Y symbols, and the resource area 2 includes D discrete or contiguous subcarriers in C symbols.

In the foregoing technical solutions, by mapping the W complex-value symbols onto the resource area 1 and mapping the reference signal onto the resource area 2, the UE can send, by using any quantity of symbols, uplink data carried on the uplink channel.

The resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain. When each UE is corresponding to a different subcarrier in frequency domain, a subcarrier spacing corresponding to each UE is the same, and subcarriers of different UEs are spaced apart from each other. A subcarrier included in the resource area 1 is located at a same subcarrier location as a subcarrier included in the resource area 2; or a subcarrier included in the resource area 1 is located at a same subcarrier location as some subcarriers included in the resource area 2.

At least one time-frequency resource unit is used by at least two UEs, and a resource area 1 and a resource area 2 of each UE may be distributed in a different manner, so that utilization of the at least one time-frequency resource unit is improved.

Before the mapping W complex-value symbols onto a resource area 1 of the UE, the method further includes: receiving configuration information sent by a base station, where the configuration information includes at least one of the following: frequency domain location information of the F subcarriers, frequency domain location information of the D subcarriers, a cyclic shift of the reference signal, symbol location information of the Y symbols, and symbol location information of the C symbols.

Correspondingly, optionally, based on the first aspect, before the mapping W complex-value symbols onto a resource area 1 of the UE, the method further includes: determining, from K symbols in one transmission time unit, Y symbols for transmitting data and C symbols for transmitting the reference signal, where the K symbols are symbols used for transmitting data and the reference signal in one transmission time unit, and Y + C ≤ K; and determining the resource area 1 of the UE and the resource area 2 of the UE based on the configuration information.

Correspondingly, optionally, based on the first aspect, the determining, from K symbols in one transmission time unit, Y symbols for transmitting data and C symbols for transmitting the reference signal includes: dividing the K symbols into consecutive P symbols and consecutive Q symbols based on a sequence of the K symbols; and separately determining i symbols of the P symbols and i symbols of the Q symbols as symbols for transmitting the reference signal, and determining Q-i symbols of the Q symbols and P-i symbols of the P symbols as symbols for transmitting the data, where Y = P + Q - 2i, C = 2i, and i is an integer greater than or equal to 1.

Optionally, based on the second aspect, before the receiving signals of a resource area 1 and a resource area 2 sent by user equipment UE, the method further includes: determining configuration information, where the configuration information includes at least one of the following: frequency domain location information of the F subcarriers, frequency domain location information of the D subcarriers, a cyclic shift of the reference signal, symbol location information of the Y symbols, and symbol location information of the C symbols; and sending the configuration information to the UE, so that the UE determines the resource area 1 and the resource area 2 of the UE based on the configuration information.

In the foregoing optional technical solutions, the UE may quickly and effectively determine the resource area 1 and the resource area 2 of the UE by using different configuration information, thereby improving a rate of determining the resource area 1 and the resource area 2 by the UE.

Optionally, based on the first aspect or the second aspect, a quantity of the at least one time-frequency resource unit is E; and if E is an even number greater than or equal to 2, contiguous E/2 time-frequency resource units in the at least one time-frequency resource unit are corresponding to the P symbols, and remaining contiguous E/2 time-frequency resource units are corresponding to the Q symbols.

Optionally, based on the first aspect or the second aspect, a quantity of the at least one time-frequency resource unit is E; and if E is an even number greater than or equal to 2, each of the at least one time-frequency resource unit is corresponding to the K symbols.

In the foregoing optional technical solutions, two different distribution manners of the at least one time-frequency resource unit are provided. In other words, when the quantity of the at least one time-frequency resource unit is an even number, the at least one time-frequency resource unit may be distributed by using either of the two manners.

Optionally, based on the first aspect or the second aspect, the mapping W complex-value symbols onto a resource area 1 of the UE includes: mapping the W complex-value symbols onto each resource area 3 included in the resource area 1 of the UE. Each of the at least one time-frequency resource unit includes one resource area 3, one resource area 3 includes f discrete or contiguous subcarriers in y symbols, and the W complex-value symbols are arranged in y^{∗}f resource elements of the resource area 3 according to a specified rule, where y ≤ Y, and f≤F.

Optionally, based on the second aspect, the receiving a signal of a resource area 1 sent by user equipment UE includes: receiving a signal of each resource area 3 included in the resource area 1 sent by the UE. Each of the at least one time-frequency resource unit includes one resource area 3, one resource area 3 includes f discrete or contiguous subcarriers in y symbols, and the W complex-value symbols are arranged in y^{∗}f resource elements of the resource area 3 according to a specified rule, where y ≤ Y, and f ≤ F.

Correspondingly, optionally, based on the first aspect, the method further includes: dividing the W complex-value symbols into consecutive A complex-value symbols and consecutive B complex-value symbols; correspondingly, the mapping the W complex-value symbols onto each resource area 3 included in the resource area 1 of the UE includes: mapping the A complex-value symbols onto each resource area 3 in a first portion of the resource area 3, and mapping the B complex-value symbols onto each resource area 3 in a second portion of the resource area. The first portion of the resource area 3 is corresponding to the P symbols, and the second portion of the resource area 3 is corresponding to the K symbols. Alternatively, the first portion of the resource area 3 and the second portion of the resource area 3 are both corresponding to the K symbols, the first portion of the resource area 3 is located in E/2 time-frequency resource units in the at least one time-frequency resource unit, and the second portion of the resource area 3 is located in remaining E/2 time-frequency resource units.

Correspondingly, optionally, based on the second aspect, the receiving a signal of each resource area 3 included in the resource area 1 sent by the UE includes: receiving a signal sent by the UE in each resource area 3 in a first portion of the resource area 3 and a signal sent by the UE in each resource area 3 in a second portion of the resource area. The first portion of the resource area 3 includes A complex-value symbols, and the second portion of the resource area 3 includes B complex-value symbols, where A + B = W. The first portion of the resource area 3 is corresponding to the P symbols, and the second portion of the resource area 3 is corresponding to the Q symbols. Alternatively, the first portion of the resource area 3 and the second portion of the resource area 3 are both corresponding to the K symbols, the first portion of the resource area 3 is located in E/2 time-frequency resource units in the at least one time-frequency resource unit, and the second portion of the resource area 3 is located in remaining E/2 time-frequency resource units.

Correspondingly, optionally, based on the first aspect or the second aspect, the arranging according to a specified rule includes: arranging in a time-domain-before-frequency-domain order in the y^{∗}f resource elements, or arranging in a frequency-domain-before-time-domain order in the y^{∗}f resource elements, or arranging in the y^{∗}f resource elements based on a preset correspondence between a complex-value symbol and a resource element.

In the foregoing optional technical solutions, the UE may use a different manner to map the complex-value symbols onto each resource area 3 included in the resource area 1, and the complex-value symbols may be arranged according to a plurality of different rules, so that the at least one time-frequency resource unit can be flexibly used.

Optionally, based on the first aspect, the mapping a reference signal corresponding to the uplink channel onto the resource area 2 of the UE includes: mapping, based on a cyclic shift of the reference signal, the reference signal onto each resource area 4 included in the resource area 2 of the UE. A quantity of the resource area 4 is the same as a quantity of the resource area 3, and one resource area 4 includes d discrete or contiguous subcarriers in c symbols, where c ≤ C, and d ≤ D.

Optionally, based on the second aspect, the receiving a signal of a resource area 2 sent by user equipment UE includes: receiving, based on a cyclic shift of the reference signal, a signal of each resource area 4 included in the resource area 2 of the UE. A quantity of the resource area 4 is the same as a quantity of the resource area 3, and one resource area 4 includes d discrete or contiguous subcarriers in c symbols, where c ≤ C, and d ≤ D.

In the foregoing optional technical solutions, the UE may map the reference signal onto each resource area 4 included in the resource area 2, and the quantity of the resource area 4 is the same as the quantity of the resource area 3, so that the base station may perform demodulation on a signal of one resource area 3 based on a signal of one resource area 4, to obtain the W complex-value symbols.

Optionally, based on the first aspect, before the mapping a reference signal corresponding to the uplink channel onto the resource area 2 of the UE, the method further includes: determining, based on a user identifier of the UE, frequency domain locations of the F discrete or contiguous subcarriers included in the resource area 2 of the UE; and/or determining the cyclic shift of the reference signal based on the user identifier of the UE, and/or a start location of a UE subcarrier, and/or an end location of a UE subcarrier.

Optionally, based on the second aspect, before the receiving a signal of a resource area 2 sent by user equipment UE, the method further includes: determining, based on a user identifier of the UE, frequency domain locations of the F discrete or contiguous subcarriers included in the resource area 2 of the UE; and/or determining the cyclic shift of the reference signal based on the user identifier of the UE, and/or a start location of a UE subcarrier, and/or an end location of a UE subcarrier.

According to a third aspect, user equipment is provided, where the user equipment includes a memory and a processor, the memory stores code and data, and the processor runs the code in the memory, so that the user equipment executes the transmission method according to any one of the first aspect.

According to a fourth aspect, a base station is provided, where the base station includes a memory and a processor, the memory stores code and data, and the processor runs the code in the memory, so that the base station executes the transmission method according to any one of the second aspect.

According to the transmission method, the user equipment, and the base station provided in the embodiments of the present invention, after mapping the W complex-value symbols of the uplink channel onto the resource area 1 including the F discrete or contiguous subcarriers in the Y symbols and mapping the reference signal corresponding to the uplink channel onto the resource area 2 including the D discrete or contiguous subcarriers in the C symbols, the user equipment sends the signals of the resource area 1 and the resource area 2 to the base station. In this way, the user equipment can send, by using any quantity of symbols, uplink data carried on the uplink channel, thereby improving resource utilization and resource use flexibility.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.
FIG. 1 is a schematic diagram of a mapping process of a modulation symbol according to the prior art;
FIG. 2 is a system architecture diagram of a communications system according to an embodiment of the present invention;
FIG. 3 is a schematic structural diagram of a base station according to an embodiment of the present invention;
FIG. 4 is a schematic structural diagram of a baseband subsystem according to an embodiment of the present invention;
FIG. 5 is a schematic structural diagram of user equipment according to an embodiment of the present invention;
FIG. 6 is a schematic flowchart of a transmission method according to an embodiment of the present invention;
FIG. 7 is a schematic diagram of reusing of a resource area 1 according to an embodiment of the present invention;
FIG. 8 is another schematic diagram of reusing of a resource area 1 according to an embodiment of the present invention;
FIG. 9 is still another schematic diagram of reusing of a resource area 1 according to an embodiment of the present invention;
FIG. 10 is a schematic diagram of reusing of a resource block according to an embodiment of the present invention;
FIG. 11 is another schematic diagram of reusing of a resource block according to an embodiment of the present invention;
FIG. 12 is still another schematic diagram of reusing of a resource block according to an embodiment of the present invention;
FIG. 13 is still another schematic diagram of reusing of a resource block according to an embodiment of the present invention;
FIG. 14 is a schematic flowchart of another transmission method according to an embodiment of the present invention;
FIG. 15 is a schematic diagram of distribution of at least one time-frequency resource unit according to an embodiment of the present invention;
FIG. 16 is another schematic diagram of distribution of at least one time-frequency resource unit according to an embodiment of the present invention;
FIG. 17 is a first schematic diagram of complex-value symbol mapping according to an embodiment of the present invention;
FIG. 18 is a second schematic diagram of complex-value symbol mapping according to an embodiment of the present invention;
FIG. 19 is a third schematic diagram of complex-value symbol mapping according to an embodiment of the present invention;
FIG. 20 is a fourth schematic diagram of complex-value symbol mapping according to an embodiment of the present invention;
FIG. 21 is a fifth schematic diagram of complex-value symbol mapping according to an embodiment of the present invention;
FIG. 22 is a sixth schematic diagram of complex-value symbol mapping according to an embodiment of the present invention;
FIG. 23 is a seventh schematic diagram of complex-value symbol mapping according to an embodiment of the present invention;
FIG. 24 is an eighth schematic diagram of complex-value symbol mapping according to an embodiment of the present invention;
FIG. 25 is a schematic diagram of complex-value symbol arrangement according to an embodiment of the present invention;
FIG. 26 is a first schematic diagram of reference signal mapping according to an embodiment of the present invention;
FIG. 27 is a second schematic diagram of reference signal mapping according to an embodiment of the present invention;
FIG. 28 is a third schematic diagram of reference signal mapping according to an embodiment of the present invention;
FIG. 29 is a fourth schematic diagram of reference signal mapping according to an embodiment of the present invention;
FIG. 30 is a schematic structural diagram of user equipment according to an embodiment of the present invention;
FIG. 31 is a schematic structural diagram of another user equipment according to an embodiment of the present invention;
FIG. 32 is a schematic structural diagram of still another user equipment according to an embodiment of the present invention;
FIG. 33 is a schematic structural diagram of a base station according to an embodiment of the present invention;
FIG. 34 is a schematic structural diagram of another base station according to an embodiment of the present invention; and
FIG. 35 is a schematic structural diagram of still another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In this specification, "a plurality of' refers to two or more than two. The term "and/or" describes an association relationship between associated objects, and indicates that three relationships may exist. For example, A and/or B may represent the following three cases: Only A exists, both A and B exist, and only B exists. The character "/" usually indicates an "or" relationship between former and latter associated objects.

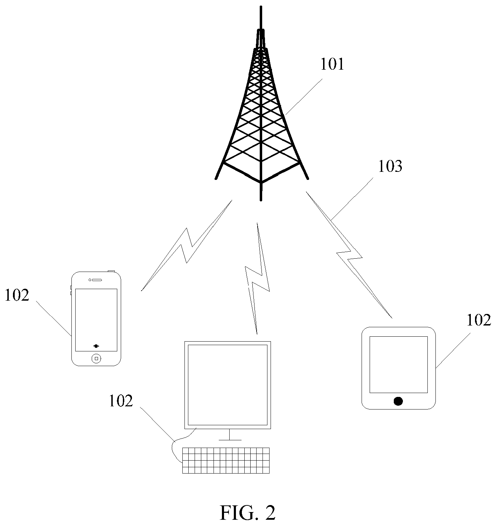

A system architecture of a communications system to which the embodiments of the present invention are applied is shown in FIG. 2. The system architecture diagram includes a base station 101, user equipment 102, and a communication channel 103.

The base station 101 has a function of scheduling a shared channel. To be specific, it can perform scheduling based on a history of packet data sent to the user equipment 102. Scheduling is a mechanism required for effectively allocating a physical-layer resource to obtain a statistical multiplexing gain when a plurality of user equipments 102 share a transmission resource, so as .

There may be a plurality of user equipments 102. In addition, the user equipment 102 has functions of sending and receiving data by using the communication channel 103 established between the user equipment 102 and the base station 101. The user equipment 102 performs sending or receiving processing on a shared channel based on information sent on a scheduling control channel. Moreover, the user equipment 102 may be a mobile station, a mobile phone, a computer, a portable terminal, or the like. The user equipments 102 may be of a same type or different types.

Data is received and sent between the base station 101 and the user equipment 102 over the communication channel 103. The communication channel 103 may be a radio communication channel. The radio communication channel includes at least a shared channel and a scheduling control channel. The shared channel is shared between a plurality of user equipments 102 to send and receive a packet. The scheduling control channel is used to send shared-channel allocation, a corresponding scheduling result, and the like.

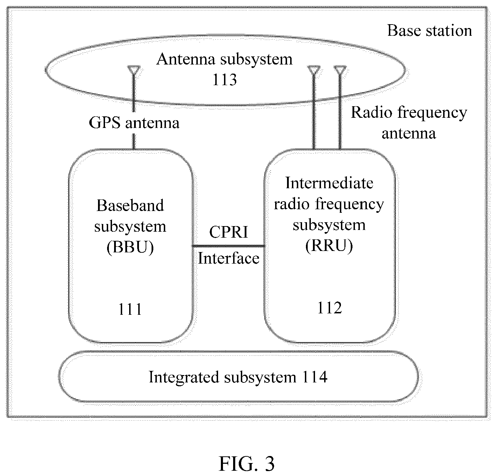

FIG. 3 is a structural diagram of hardware of a base station according to an embodiment of the present invention. As shown in FIG. 3, the base station includes a baseband subsystem 111, an intermediate radio frequency subsystem 112, an antenna subsystem 113, and some support structures 114 (for example, an integrated subsystem). The baseband subsystem 111 is configured to operate and maintain the entire base station, process signaling, manage radio resources, and implement a transmission interface to an EPC (Evolved Packet Core, Evolved Packet Core), and implement a main control function of LTE physical layer, MAC (Medium Access Control, media access control) layer, and L3 signaling, operation, and maintenance, a MAC (Medium Access Control, media access control) layer, and L3 signaling. The intermediate radio frequency subsystem 112 is configured to convert between a baseband signal, an intermediate frequency signal, and a radio frequency signal, demodulate an LTE radio received signal, and modulate and amplify a to-be-sent signal. The antenna subsystem 113 includes an antenna and a feeder that are connected to an antenna and a feeder of a base station radio frequency module and an antenna and a feeder of a GRS reception card, to receive and send a radio air-interface signal. The integrated subsystem 114 is a support part of the baseband subsystem 111 and the intermediate radio frequency subsystem 112, and provides a structure, power supply, and an environment monitoring function.

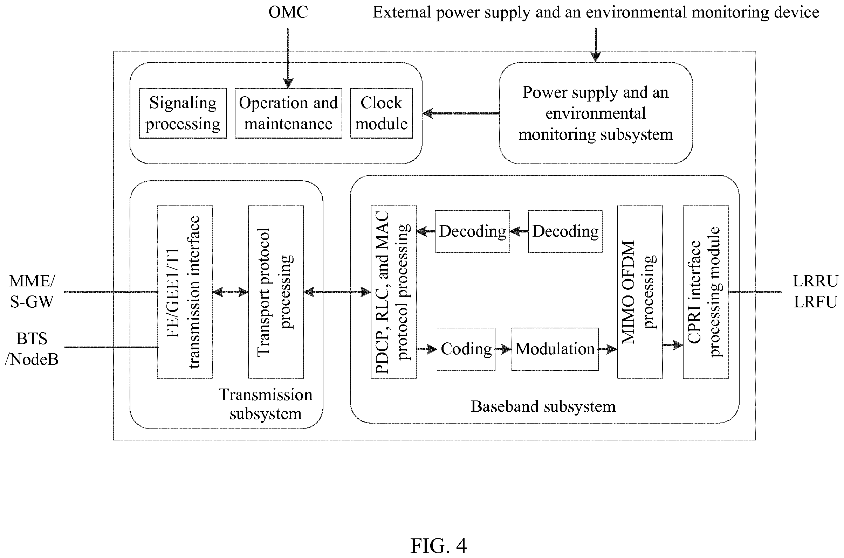

The baseband subsystem 111 may be shown in FIG. 4. For example, to access the Internet, a mobile phone needs to access a core network (MME/S-GW) by using a base station, and then access the Internet by using the core network. Data of the Internet is transferred to a baseband part through an interface between the core network and the base station, and the baseband part performs processing, such as PDCP processing, RLC processing, MAC layer processing, coding processing, and modulation processing, and delivers the data to a radio frequency part, so that the radio frequency part transmits the data to a user terminal. The baseband and the radio frequency may be connected to each other by using a CPRI interface. In addition, currently, the radio frequency part may be remotely deployed by using an optical fiber, such as a remote RRU. Steps of a data transmission method in the embodiments of the present invention are implemented by the baseband by using the radio frequency, and a step of receiving and sending is implemented by using an antenna (such as an air interface).

An interface between a user terminal and a base station in the embodiments of the present invention may be understood as an air interface for communication between the user terminal and the base station, or may be referred to a Uu interface.

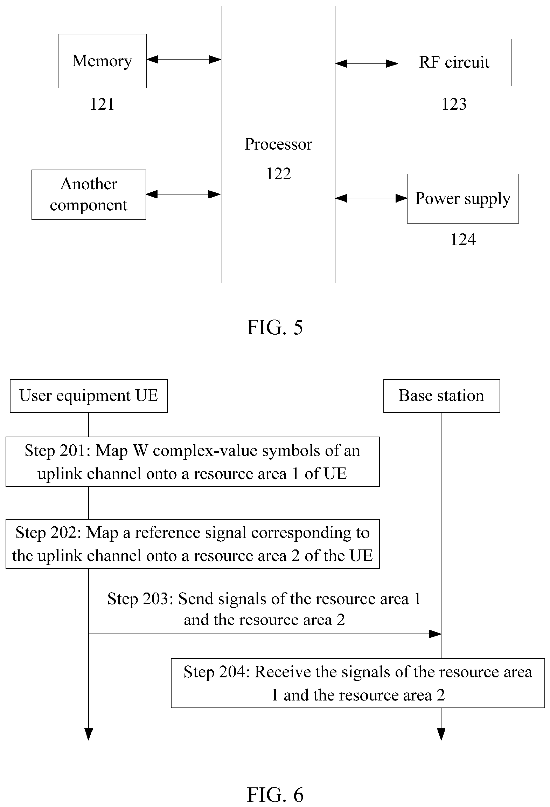

FIG. 5 is a schematic structural diagram of user equipment to which an embodiment of the present invention is applied. For example, the user equipment may be a mobile phone, a tablet computer, a notebook computer, a UMPC (Ultra-Mobile Personal Computer, ultra-mobile personal computer), a netbook, or a PDA (Personal Digital Assistant, personal digital assistant). This embodiment of the present invention is described by using an example in which the user equipment is a mobile phone. FIG. 5 is a block diagram of a partial structure of a mobile phone related to the embodiments of the present invention.

As shown in FIG. 5, the mobile phone includes: a memory 121, a processor 122, an RF (Radio Frequency, radio frequency) circuit 123, a power supply 124, and another component. A person skilled in the art can understand that the structure of the mobile phone shown in FIG. 5 does not constitute any limitation on the mobile phone, and the mobile phone may include more or fewer parts than those shown in the figure, or a combination of some parts, or differently disposed parts.

The following specifically describes constituent parts of the mobile phone with reference to FIG. 5.

The memory may be configured to store a software program and a module. The processor executes various function applications and data processing of the mobile phone by running the software program and the module stored in the memory. The memory may mainly include a program storage area and a data storage area. The program storage area may store an operating system, an application program needed by at least one function, and the like. The data storage area may store data created based on use of the mobile phone, and the like. In addition, the memory may include a high-speed random access memory, and may further include a nonvolatile memory and the like.

The processor is a control center of the mobile phone, and connects all parts of the entire mobile phone by using various interfaces and lines. The processor executes various functions and data processing of the mobile phone by running or executing the software program and/or the module stored in the memory and invoking data stored in the memory, so as to monitor the entire mobile phone. Optionally, the processor may include one or more processing units. Preferably, an application processor and a modem processor may be integrated into the processor. The application processor mainly processes an operating system, a user interface, an application program, and the like. The modem processor mainly processes radio communication.

The RF circuit may be configured to receive and send a signal in an information receiving and sending process or a call process. Generally, the RF circuit includes but is not limited to an antenna, at least one amplifier, a transceiver, a coupler, a low noise amplifier LNA, a duplexer, and the like. In addition, the RF circuit may further communicate with a network and another device through radio communication. The radio communication may use any communication standard or protocol, including but not limited to Global System for Mobile Communications GSM, General Packet Radio Service GPRS, Code Division Multiple Access CDMA, Wideband Code Division Multiple Access WCDMA, Long Term Evolution LTE, email, short message service SMS, and the like.

The mobile phone further includes the power supply (for example, a battery) that supplies power to each part. Preferably, the power supply may be logically connected to the processor by using a power management system, so as to implement functions such as charge management, discharge management, and power consumption management by using the power management system.

Although not shown, the mobile phone may further include an input unit, a display unit, a sensor module, an audio module, a Wi-Fi (wireless fidelity, Wireless Fidelity) module, a Bluetooth module, and the like. Details are not described herein.

FIG. 6 is a schematic flowchart of a data transmission method according to an embodiment of the present invention. Referring to FIG. 6, the method includes the following several steps.

Step 201: User equipment UE maps W complex-value symbols of an uplink channel onto a resource area 1 of the UE, where the resource area 1 of the UE includes F discrete or contiguous subcarriers in Y symbols.

The W complex-value symbols may be orthogonal modulation symbols. For example, the modulation symbol may be an OFDM symbol or an SC-FDMA symbol. This is not limited in this embodiment of the present invention.

In addition, the W complex-value symbols are control information carried on a physical uplink control channel (Physical Uplink Control Channel, PUCCH). The control information may be an ACK/NACK answer message used for replying to downlink service data, may be a signaling uplink scheduling request indicator SRI used for applying, by a user, to a base station for an uplink radio resource configuration, may be a signaling channel quality indicator CQI used for channel quality estimation, or the like. Different control information may be corresponding to different quantities of complex-value symbols. This is not limited in this embodiment of the present invention.

For example, when the control information is the ACK/NACK answer message, the W complex-value symbols may be one modulation symbol, or when the control information is the CQI, the W complex-value symbols may be 10 modulation symbols, which, for example, may be denoted by d0 to d9.

The resource area 1 of the UE includes a resource in time domain and a resource in frequency domain. The Y symbols are symbol resources included in the resource area 1 of the UE in time domain, and the Y symbols may be discrete symbols, or may be consecutive symbols. The F discrete or contiguous subcarriers are discrete or contiguous subcarrier resources included in the resource area 1 of the UE in frequency domain.

When the resource in time domain is represented by a transmission time interval (Transmission Time Interval, TTI), the Y symbols may be located in a same TTI, or may be located in different TTIs. When the resource in frequency domain is represented by a resource block (Resource Block, RB), the F discrete or contiguous subcarriers may be located in a same RB, or may be located in different RBs. This is not limited in this embodiment of the present invention.

Step 202: The UE maps a reference signal corresponding to the uplink channel onto a resource area 2 of the UE, where the resource area 2 includes D discrete or contiguous subcarriers in C symbols.

The reference signal corresponding to the uplink channel is a known signal. When the base station receives the W complex-value symbols and the reference signal, the reference signal is used for uplink channel estimation, so as to obtain the W complex-value symbols.

In addition, the resource area 2 of the UE also includes a resource in time domain and a resource in frequency domain. The C symbols are discrete or consecutive symbol resources included in the resource area 2 of the UE in time domain, and the D discrete or contiguous subcarriers are discrete or contiguous subcarriers included in the resource area 2 of the UE in frequency domain.

When the resource in time domain is represented by a transmission time interval (Transmission Time Interval, TTI), the C symbols may be located in a same TTI, or may be located in different TTIs. When the resource in frequency domain is represented by a resource block (Resource Block, RB), the D discrete or contiguous subcarriers may be located in a same RB, or may be located in different RBs. This is not limited in this embodiment of the present invention.

It should be noted that step 201 and step 202 are performed in no particular order. To be specific, the UE may first map the W complex-value symbols onto the resource area 1 of the UE, and then map the reference signal onto the resource area 2 of the UE; the UE may first map the reference signal onto the resource area 2 of the UE, and then map the W complex-value symbols onto the resource area 1 of the UE; or the UE may simultaneously map the W complex-value symbols and the reference signal onto the resource area 1 of the UE and resource area 2 of the UE respectively. This is not limited in this embodiment of the present invention.

Step 203: The UE sends signals of the resource area 1 and the resource area 2.

After the UE maps the W complex-value symbols onto the resource area 1 of the UE, and maps the reference signal corresponding to the uplink channel onto the resource area 2 of the UE, the UE may send the W complex-value symbols and the reference signal to the base station by using the resource area 1 and the resource area 2.

Step 204: A base station receives the signals of the resource area 1 and the resource area 2 sent by the UE.

When the base station receives the signals of the resource area 1 and the pilot resource area 2 sent by the UE, the base station may perform parsing on the resource area 1 and the resource area 2 of the UE, thereby obtaining the W complex-value symbols and the reference signal.

It should be noted that the resource area 1 and the resource area 2 of the UE in step 204 are the same as the resource area 1 of the UE in step 201 and the resource area 2 of the UE in step 202, respectively. For details, refer to the foregoing description. Details are not described herein in this embodiment of the present invention again.

Optionally, the resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain. Further, when each UE is corresponding to a different subcarrier in frequency domain, a subcarrier spacing corresponding to each UE is the same, and subcarriers of different UEs are spaced apart from each other.

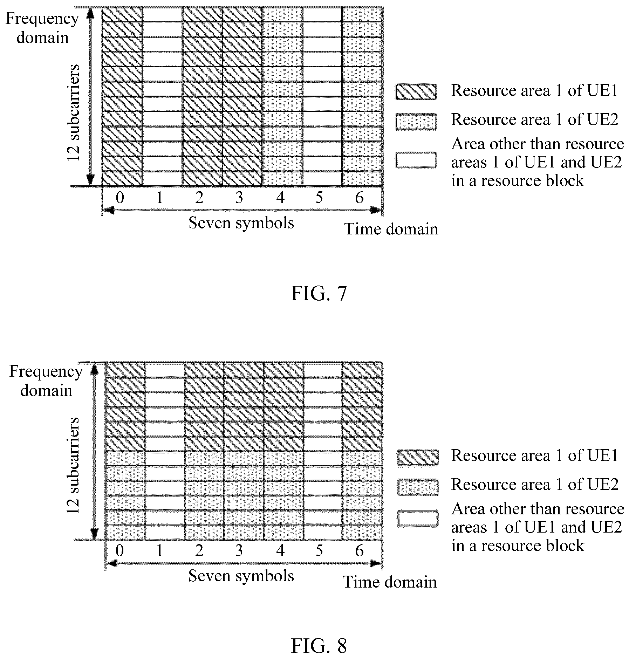

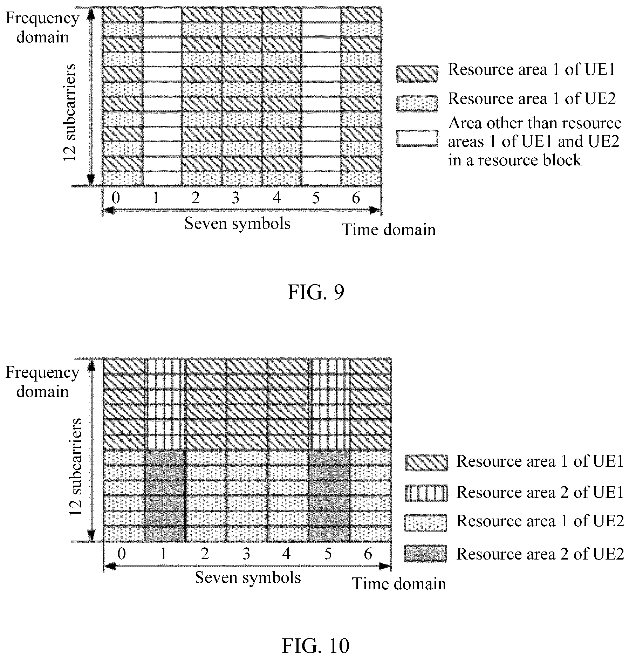

Specifically, using the resource area 1 of the UE as an example, the resource area 1 is located in at least one time-frequency resource unit, and the time-frequency resource unit is a resource block RB. When the at least one time-frequency resource unit is one resource block, the resource block RB is used by UE 1 and UE 2. When the UE 1 and the UE 2 are corresponding to different symbols in time domain, as shown in FIG. 7, the UE 1 is corresponding to a symbol 0, a symbol 2, and a symbol 3 in time domain, and the UE 2 is corresponding to a symbol 4 and a symbol 6 in time domain. When the UE 1 and the UE 2 are corresponding to different subcarriers in frequency domain, and a subcarrier corresponding to each UE is contiguous subcarriers, as shown in FIG. 8, the UE 1 is corresponding to first six contiguous subcarriers in frequency domain and the UE 2 is corresponding to last six contiguous subcarriers in frequency domain. When the subcarrier spacing corresponding to each UE is the same, and subcarriers of different UEs are spaced apart from each other, the subcarriers corresponding to the UE 1 and the UE 2 respectively in frequency domain are shown in FIG. 9.

It should be noted that when the resource area 2 of the UE is located in at least one time-frequency resource unit, and the at least one time-frequency resource unit is used by at least two UEs, a use method is the same as the use method of the resource area 1 of the UE shown in FIG. 7 to FIG. 9. Details are not described herein in this embodiment of the present invention again.

Further, a location relationship between the resource area 1 and the resource area 2 of the UE is as follows: A subcarrier included in the resource area 1 of the UE is located at a same subcarrier location as a subcarrier included in the resource area 2; or a subcarrier included in the resource area 1 is located at a same subcarrier location as some subcarriers included in the resource area 2.

Specifically, when the resource area 1 and the resource area 2 of the UE are located in at least one time-frequency resource unit, if the at least one time-frequency resource unit is not used by at least two UEs, the subcarrier included in the resource area 1 of the UE is located at a same subcarrier location as the subcarrier included in the resource area 2, or if the at least one time-frequency resource unit is used by at least two UEs, a subcarrier included in a resource area 1 of each of the at least two UEs is located at a same subcarrier location as a subcarrier included in a resource area 2 of each UE, or a subcarrier included in a resource area 1 of each UE is located at a same subcarrier location as some subcarriers included in a resource area 2 of each UE.

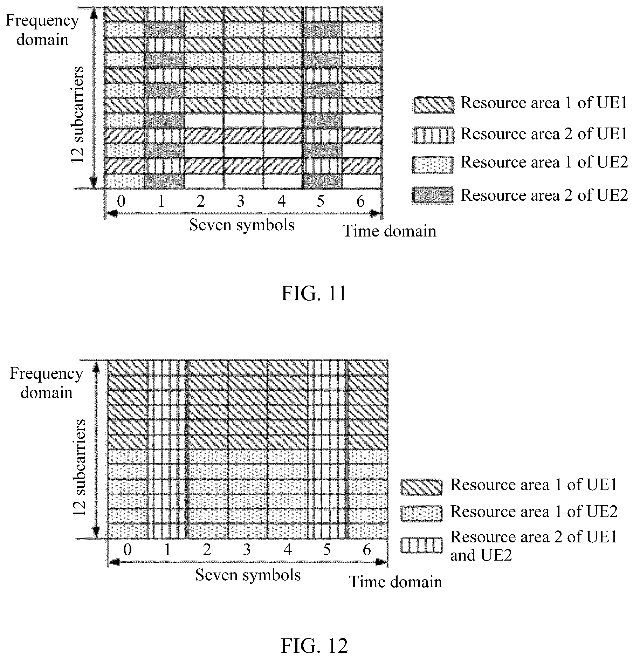

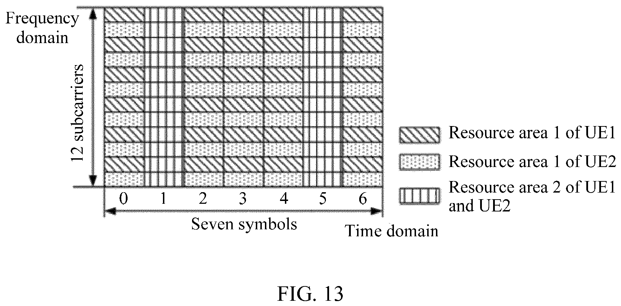

For example, an example in which the at least one time-frequency resource unit includes one resource block RB, and the resource block RB is used by the UE 1 and the UE 2 is used. When a subcarrier included in a resource area 1 of each of the UE 1 and the UE 2 is located at a same subcarrier location as a subcarrier included in a resource area 2 of each of the UE 1 and the UE 2, a subcarrier of each UE being contiguous subcarriers is shown in FIG. 10; or a subcarrier of each UE being discrete subcarriers is shown in FIG. 11. When a subcarrier included in a resource area 1 of each of the UE 1 and the UE 2 is located at a same subcarrier location as some subcarriers included in a resource area 2 of each of the UE 1 and the UE 2, a subcarrier of each UE being contiguous subcarriers is shown in FIG. 12; or a subcarrier of each UE being discrete subcarriers is shown in FIG. 13. Resource areas 2 of the UE 1 and the UE 2 are a same area.

It should be noted that when the subcarrier included in the resource area 1 is located at a same subcarrier location as some subcarriers included in the resource area 2, all subcarriers included in the resource area 2 may be located in a same time-frequency resource unit as the resource area 1, as shown in FIG. 10 to FIG. 13. Alternatively, some subcarriers included in the resource area 2 are located in a same time-frequency resource unit as the resource area 1, and remaining subcarriers are located in a different time-frequency resource unit. This is not limited in this embodiment of the present invention.

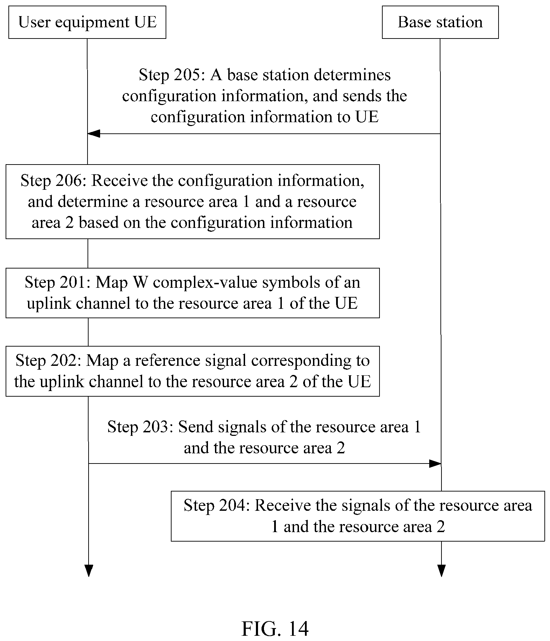

Further, referring to FIG. 14, before step 201, the method further includes the following steps.

Step 205: The base station determines configuration information, and sends the configuration information to the UE. The configuration information includes at least one of the following: frequency domain location information of the F subcarriers, frequency domain location information of the D subcarriers, a cyclic shift of the reference signal, symbol location information of the Y symbols, and symbol location information of the C symbols.

The frequency domain location information of the F subcarriers may include a frequency domain range of the F subcarriers, a subcarrier spacing, a start location of a subcarrier, an end location of a subcarrier, or other information. Locations of the F subcarriers in the at least one time-frequency resource unit in the resource area 1 of the UE can be determined by using the frequency domain location information of the F subcarriers. Similarly, the frequency domain location information of the D subcarriers is similar to the frequency domain location information of the F subcarriers. For details, refer to description of the frequency domain location information of the F subcarriers. Details are not described herein in this embodiment of the present invention again.

In addition, the cyclic shift of the reference signal refers to shift information of the reference signal corresponding to the UE, and reference signals of different UEs achieve orthogonality by using different cyclic shifts.

Moreover, the symbol location information of the Y symbols or the symbol location information of the C symbols may include a symbol location of the Y symbols or the C symbols in one transmission time unit. The symbol location may be a location label.

It should be noted that the transmission time unit may be a transmission time interval TTI, may also be a subframe, a timeslot, a time unit, or the like. This is not limited in this embodiment of the present invention.

Step 206: The UE receives the configuration information sent by the base station, and determines the resource area 1 and the resource area 2 of the UE based on the configuration information.

The configuration information may include at least one piece of different information, and therefore, a method for determining the resource area 1 and the resource area 2 of the UE based on the configuration information may be different methods. Details are as follows.

Optionally, when the configuration information does not include the symbol location information of the Y symbols and/or the symbol location information of the C symbols, the UE may determine the resource area 1 and the resource area 2 by determining, from K symbols in one transmission time unit, Y symbols for transmitting data and C symbols for transmitting the reference signal. The K symbols are symbols used for transmitting data and the reference signal in one transmission time unit, where Y + C ≤ K.

Specifically, there may be two methods for determining the Y symbols for transmitting the data and the C symbols for transmitting the reference signal in one transmission time unit. The methods are specifically described as follows:
A first method includes: dividing the K symbols into consecutive P symbols and consecutive Q symbols based on a sequence of the K symbols in one transmission time unit, separately determining i symbols of the P symbols and i symbols of the Q symbols as symbols for transmitting the reference signal, and determining Q-i symbols of the Q symbols and P-i symbols of the P symbols as symbols for transmitting the data, where Y = P + Q - 2i, C = 2i, and i is an integer greater than or equal to 1.

For example, K = 7, and the seven symbols are divided into consecutive four symbols and consecutive three symbols based on the sequence, that is, P = 4 and Q = 3. In this case, if i = 1, a quantity of Y symbols for transmitting the data is 5, and a quantity of C symbols for transmitting the reference signal is 2.

Determining the Y symbols for transmitting the data and the C symbols for transmitting the reference signal in one transmission time unit is determining time domain resource locations of the resource area 1 and the resource area 2 of the UE in time domain in the at least one time-frequency resource unit. Specifically, according to the first method, if a quantity of the at least one time-frequency resource unit is E, and E is an even number greater than or equal to 2, contiguous E/2 time-frequency resource units in the at least one time-frequency resource unit are corresponding to the P symbols, and remaining contiguous E/2 time-frequency resource units are corresponding to the Q symbols. Herein, that the at least one time-frequency resource unit is distributed in a first manner means that the at least one resource unit is distributed in a diagonal manner in a plurality of rows and two columns.

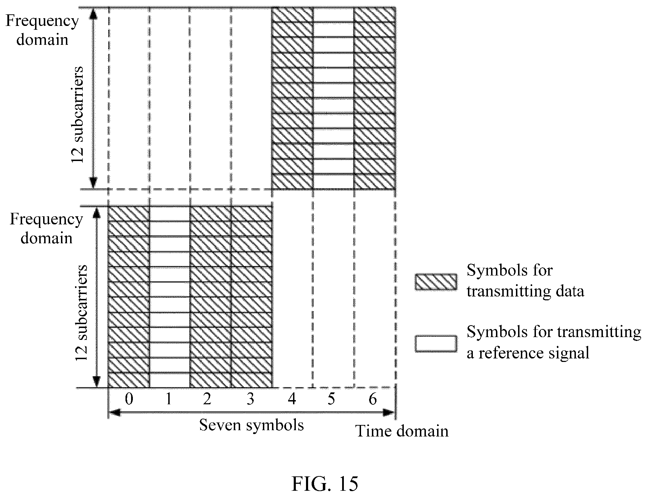

FIG. 15 is a schematic diagram of distribution of the at least one time-frequency resource unit when the quantity E of the at least one time-frequency resource unit is equal to 2. Referring to FIG. 15, seven symbols in one transmission time unit are divided into consecutive four symbols and consecutive three symbols based on a sequence, that is, P = 4 and Q = 3. In the seven symbols, a quantity of Y symbols for transmitting the data is 5, and a quantity of C symbols for transmitting the reference signal is 2.

A second method includes: directly dividing the K symbols in one transmission time unit into Y symbols and C symbols, determining the Y symbols as symbols for transmitting the data, and determining the C symbols as symbols for transmitting a pilot.

In other words, the K symbols do not need to be divided based on a sequence of the K symbols; The Y symbols in the K symbols may be directly determined as the symbols for transmitting the data, and the C symbols in the K symbols may be directly determined as the symbols for transmitting the pilot. In addition, the Y symbols and the C symbols may be consecutive or may be discrete.

For example, K = 7, and the seven symbols are divided into five symbols and two symbols; the five symbols are determined as the symbols for transmitting the data, and the two symbols are determined as the symbols for transmitting the reference signal.

Determining the Y symbols for transmitting the data and the C symbols for transmitting the reference signal in one transmission time unit is determining time domain resource locations of the resource area 1 and the resource area 2 of the UE in time domain in the at least one time-frequency resource unit.

Specifically, according to the second method, if a quantity of the at least one time-frequency resource unit is E, and E is an even number greater than or equal to 2, each of the at least one time-frequency resource unit is corresponding to the K symbols. Herein, that the at least one time-frequency resource unit is distributed in a second manner means that the at least one resource unit is distributed on two sides of a frequency domain.

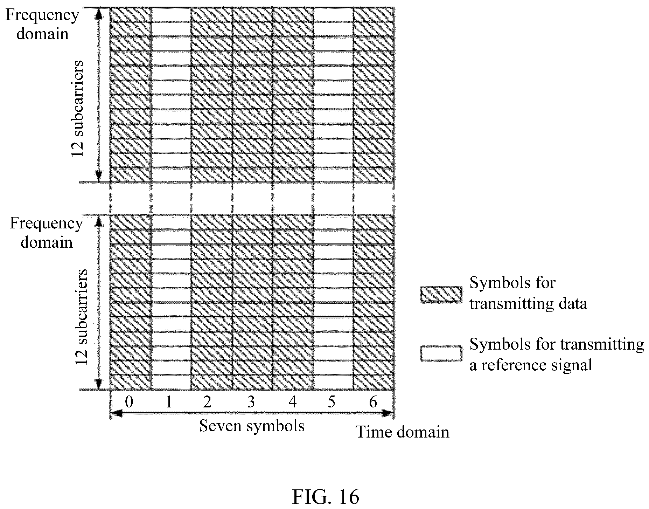

FIG. 16 is a schematic diagram of distribution of the at least one time-frequency resource unit when the quantity E of the at least one time-frequency resource unit is equal to 2. Referring to FIG. 16, seven symbols in one transmission time unit are divided into five symbols and two symbols, that is, Y = 5 and C = 2, the five symbols are used for transmitting the data, and the two symbols are used for transmitting the reference signal.

Optionally, when the configuration information includes both the symbol location information of the Y symbols and the symbol location information of the C symbols, the UE may directly determine locations of the Y symbols and the C symbols based on the configuration information.

When the configuration information includes the symbol location information of the Y symbols, locations of the Y symbols in one transmission time unit may be directly determined based on the location information of the Y symbols, and symbols other than the Y symbols in the K symbols in one transmission time unit are determined as locations of the C symbols. Similarly, when the configuration information includes the symbol location information of the C symbols, a determining method is similar to a determining method used when the configuration information includes the symbol location information of the Y symbols. Details are not described herein in this embodiment of the present invention again.

Optionally, when the configuration information includes the frequency domain location information of the F subcarriers and the frequency domain location information of the D subcarriers, the UE may directly determine locations of the F subcarriers and the D subcarriers based on the configuration information.

When the configuration information includes the frequency domain location information of the F subcarriers or the frequency domain location information of the D subcarriers, the frequency domain location information not included may be agreed on in advance, or may be sent by using another message. Then, locations of the F subcarriers and the D subcarriers are determined based on the frequency domain location information of the F subcarriers and the frequency domain location information of the D subcarriers.

Optionally, the UE may further determine frequency domain locations of the F discrete or contiguous subcarriers included in the resource area 2 of the UE based on a user identifier of the UE. Finally, when the UE determines the Y symbols for transmitting the data and the C symbols for transmitting the reference signal, and determines the locations of the F subcarriers and the D subcarriers, the resource area 1 and the resource area 2 of the UE are determined.

Further, after the UE determines the resource area 1, when the UE maps the W complex-value symbols corresponding to the uplink channel onto the resource area 1 of the UE according to step 201, mapping may be performed by using the following two different methods. The methods are specifically described as follows:
Method I: The UE maps the W complex-value symbols onto each resource area 3 included in the resource area 1 of the UE. Each of the at least one time-frequency resource unit includes one resource area 3, one resource area 3 includes f discrete or contiguous subcarriers in y symbols, and the W complex-value symbols are arranged in y^{∗}f resource elements of the resource area 3 according to a specified rule, where y ≤ Y, and f ≤ F.

In other words, the resource area 1 of the UE includes at least one resource area 3, each of the at least one time-frequency resource unit includes one resource area 3, and the resource area 1 is a general name of the at least one resource area 3. Therefore, when the UE maps the W complex-value symbols onto the resource area 1, the W complex-value symbols need to be mapped onto each resource area 3 included in the resource area 1 of the UE.

For example, the W complex-value symbols include 10 complex-value symbols, namely d0 to d9. The UE maps the complex-value symbols d0 to d9 onto each resource area 3 included in the resource area 1 of the UE. In other words, each resource area 3 includes the complex-value symbols d0 to d9.

Optionally, the at least one time-frequency resource unit may be distributed in a first manner, or may be distributed in a second manner, so that specific distribution of at least one resource area 3 included in the resource area 1 is the same as distribution of the at least one time-frequency resource unit.

To be specific, when the at least one time-frequency resource unit is distributed in the first manner, the at least one resource area 3 included in the resource area 1 of the UE is also distributed in the first manner; when the at least one time-frequency resource unit is distributed in the second manner, the at least one resource area 3 included in the resource area 1 of the UE is also distributed in the second manner.

Further, regardless of which manner is used for distribution of the at least one resource area 3 included in the resource area 1 of the UE, when the at least one time-frequency resource unit is not used by the UE, f subcarriers included in each resource area 3 may be contiguous subcarriers; when the at least one time-frequency resource unit is used by at least two UEs, f subcarriers included in a resource area 3 of each UE may be contiguous subcarriers or discrete subcarriers.

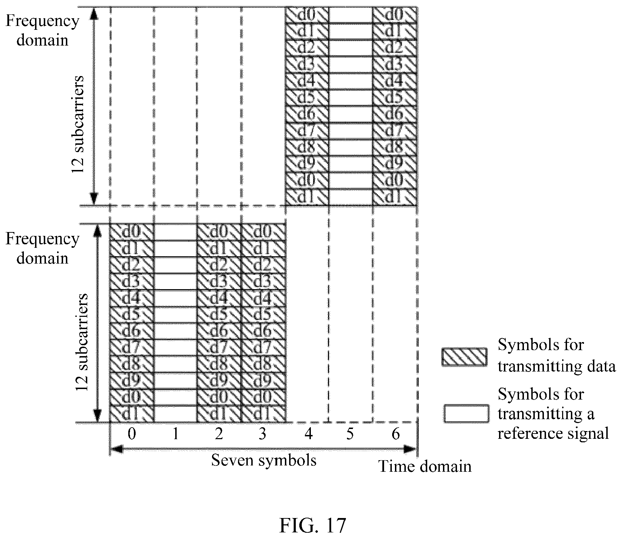

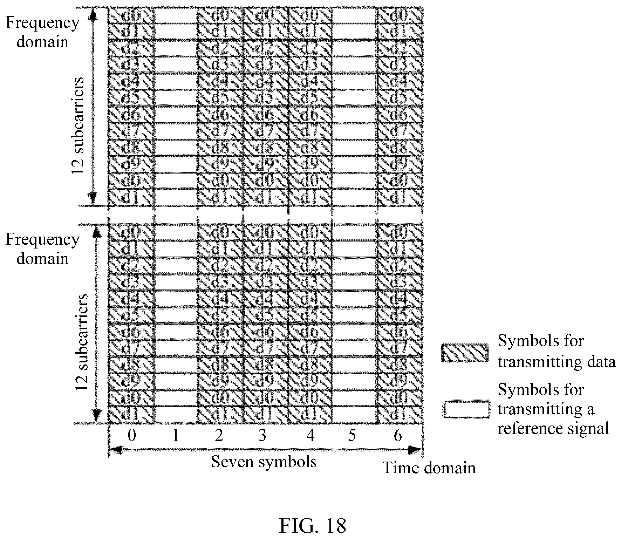

For example, in an example in which the at least one time-frequency resource unit includes two resource blocks, and the two resource blocks are not used by the UE, when the two resource blocks are distributed in the first manner, the at least one resource area 3 onto which the complex-value symbols d0 to d9 are mapped is shown in FIG. 17. When the two resource blocks are distributed in the second manner, the at least one resource area 3 onto which the complex-value symbols d0 to d9 are mapped is shown in FIG. 18.

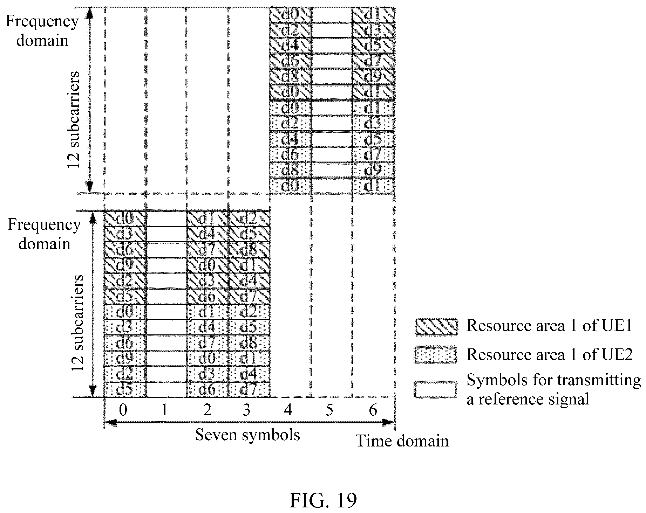

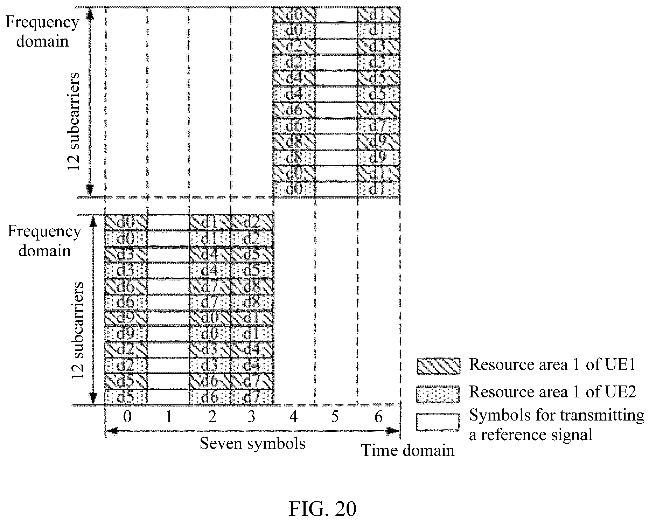

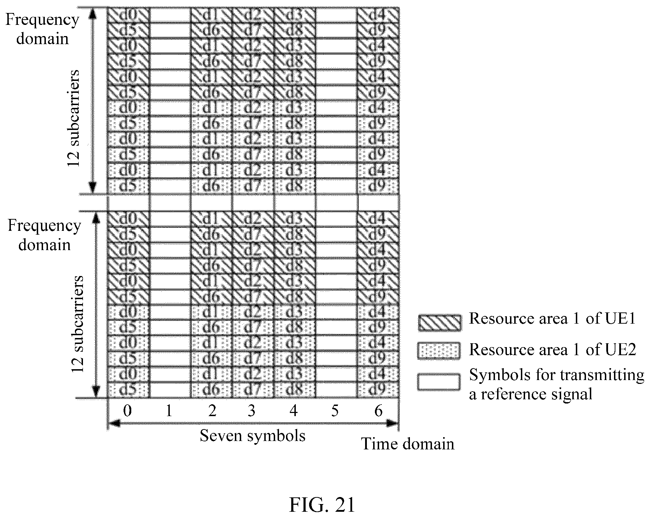

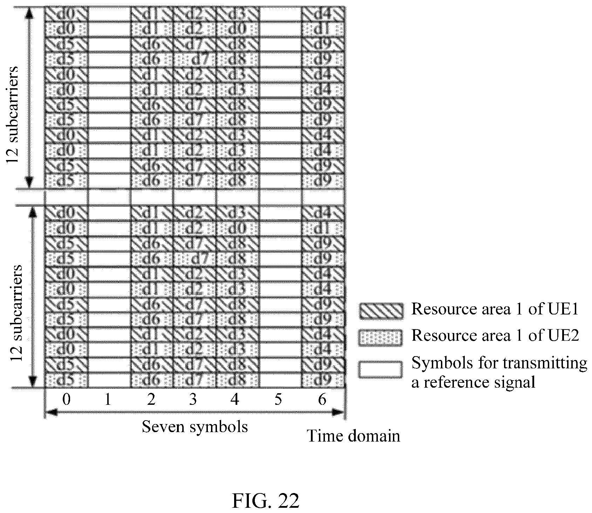

For another example, in an example in which the at least one time-frequency resource unit includes two resource blocks, and the two resource blocks are used by UE 1 and UE 2, when the two resource blocks are distributed in the first manner, if a resource area 3 corresponding to each UE includes contiguous subcarriers, the at least one resource area 3 onto which the complex-value symbols d0 to d9 are mapped by the UE 1 and the UE 2 is shown in FIG. 19; if a resource area 3 corresponding to each UE includes discrete subcarriers, the at least one resource area 3 onto which the complex-value symbols d0 to d9 are mapped by the UE1 and the UE2 is shown in FIG. 20. When the two resource blocks are distributed in the second manner, if a resource area 3 corresponding to each UE includes contiguous subcarriers, the at least one resource area 3 onto which the complex-value symbols d0 to d9 are mapped by the UE1 and the UE2 is shown in FIG. 21; if a resource area 3 corresponding to each UE includes discrete subcarriers, the at least one resource area 3 onto which the complex-value symbols d0 to d9 are mapped by the UE1 and the UE2 is shown in FIG. 22.

Correspondingly, in step 204, the receiving, by a base station, the signal of the resource area 1 sent by the UE is specifically: receiving, by the base station, a signal of each resource area 3 included in the resource area 1 sent by the UE.

The resource area 3 in which the base station receives a signal is the same as the resource area 3 onto which the UE maps the complex-value symbols in the foregoing method I. For details, refer to description in the foregoing method I. Details are not described herein in this embodiment of the present invention again.

Method II: The UE divides the W complex-value symbols into consecutive A complex-value symbols and consecutive B complex-value symbols, maps the A complex-value symbols onto each resource area 3 in a first portion of the resource area 3, and maps the B complex-value symbols onto each resource area 3 in a second portion of the resource area.

In other words, the resource area 1 of the UE includes the first portion of the resource area 3 and the second portion of the resource area 3. The resource area 3 included in a combination of the two portions is the entire resource area 3 included in the resource area 1. After the UE divides the W complex-value symbols into the consecutive A complex-value symbols and the consecutive B complex-value symbols, the UE maps the A complex-value symbols onto each resource area 3 of the first portion of the resource area 3, and maps the B complex-value symbols onto each resource area 3 of the second portion of the resource area.

For example, the W complex-value symbols include 10 complex-value symbols, namely d0 to d9. After the UE divides the complex-value symbols d0 to d9 into d0 to d4 and d5 to d9, that is, A = 5 and B = 5, the UE maps d0 to d4 onto each resource area 3 in the first portion of the resource area 3, and maps d5 to d9 onto each resource area 3 in the second portion of the resource area. In other words, the first portion of the resource area 3 includes some of the W complex-value symbols, and the second portion of the resource area 3 includes the rest of W complex-value symbols.

Specifically, the at least one time-frequency resource unit may be distributed in the first manner, or may be distributed in the second manner, so that in different distribution manners, distribution of the first portion of the resource area 3 and distribution of the second portion of the resource area 3 are also different. Details are described as follows:
When the at least one time-frequency resource unit is distributed in the first manner, the first portion of the resource area 3 is corresponding to the P symbols, and the second portion of the resource area 3 is corresponding to the Q symbols. When the at least one time-frequency resource unit is distributed in the second manner, the first portion of the resource area 3 and the second portion of the resource area 3 are both corresponding to the K symbols, the first portion of the resource area 3 is located in E/2 time-frequency resource units in the at least one time-frequency resource unit, and the second portion of the resource area 3 is located in remaining E/2 time-frequency resource units.

When the at least one time-frequency resource unit is distributed in the first manner, the first portion of the resource area 3 is corresponding to the P symbols, and the second portion of the resource area 3 is corresponding to the Q symbols, the at least one time-frequency resource unit may not be used by at least two UEs, or may be used by at least two UEs. When the at least one time-frequency resource unit is used by the at least two UEs, a subcarrier corresponding to each UE may be contiguous subcarriers or may be discrete subcarriers.

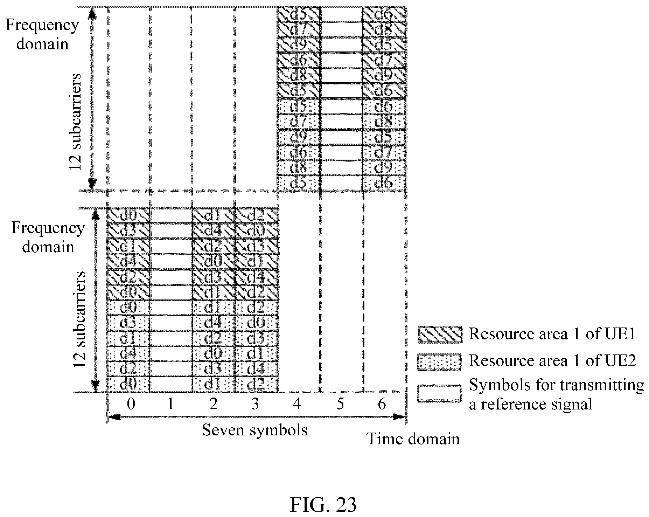

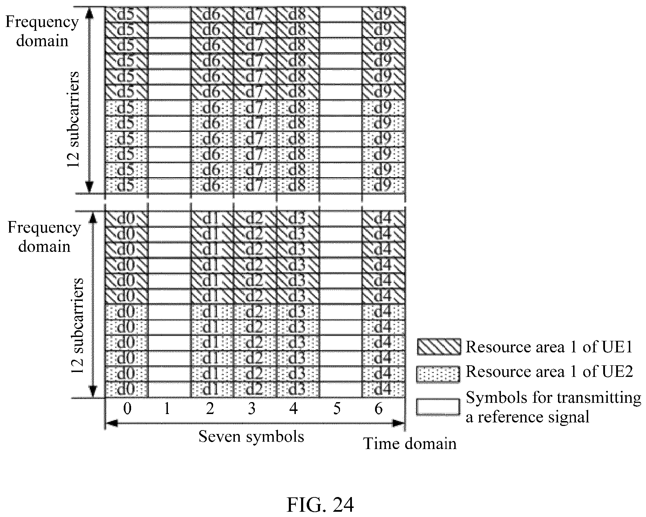

For example, in an example in which the at least one time-frequency resource unit includes two resource blocks, the two resource blocks are used by UE1 and UE2, and a subcarrier corresponding to each UE is contiguous subcarriers, when the two resource blocks are distributed in the first manner, a first portion of a resource area onto which the complex-value symbols d0 to d4 are correspondingly mapped by the UE1 and the UE2 and the second portion of the resource area 3 onto which the complex-value symbols d5 to d9 are mapped are shown in FIG. 23. When the two resource blocks are distributed in the second manner, a first portion of a resource area onto which the complex-value symbols d0 to d4 are correspondingly mapped by the UE1 and the UE2 and the second portion of the resource area 3 onto which the complex-value symbols d5 to d9 are mapped are shown in FIG. 24.

It should be noted that, in FIG. 23 and FIG. 24, description is provided by using an example in which subcarriers corresponding to the UE 1 and the UE 2 are contiguous subcarriers. Certainly, the subcarriers corresponding to the UE 1 and the UE 2 may alternatively be discrete subcarriers. This is not limited in this embodiment of the present invention.

Optionally, when the UE maps the W complex-value symbols onto the resource area 1 according to the method I or the method II, and when the W complex-value symbols, the A complex-value symbols, or the B complex-value symbols are arranged according to a specified rule, the complex-value symbols may be arranged in a time-domain-before-frequency-domain order in the y^{∗}f resource elements, may be arranged in a frequency-domain-before-time-domain order in the y^{∗}f resource elements, or may be arranged in the y^{∗}f resource elements based on a preset correspondence between a complex-value symbol and a resource element.

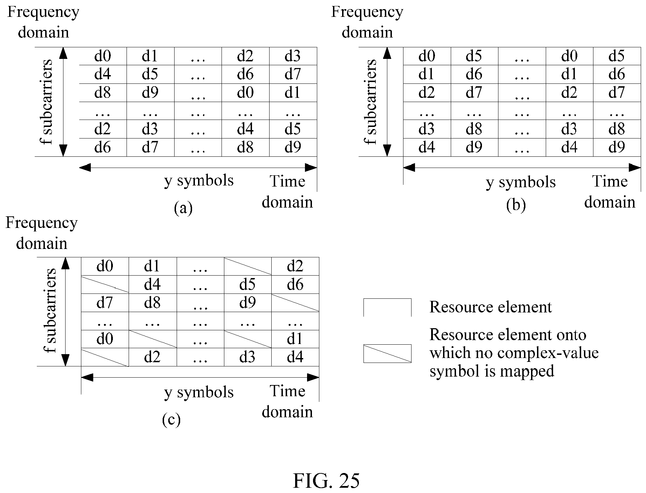

It should be noted that when the complex-value symbols are arranged in the time-domain-before-frequency-domain order in the y^{∗}f resource elements, the complex-value symbols may be arranged in a low-frequency-before-high-frequency order or a high-frequency-before-low-frequency order in frequency domain. When the complex-value symbols are arranged in the frequency-domain-before-time-domain order in the y^{∗}f resource elements, the complex-value symbols may be arranged in an earlier-to-later order or a later-to-earlier order in time domain. This is not limited in this embodiment of the present invention. For example, the y^{∗}f resource elements are shown in FIG. 25. When the 10 complex-value symbols d0 to d9 are arranged in the time-domain-before-frequency-domain order in the y^{∗}f resource elements, the high-frequency-before-low-frequency order in frequency domain is shown in FIG. 25 (a). When the 10 complex-value symbols d0 to d9 are arranged in the frequency-domain-before-time-domain order in the y^{∗}f resource elements, the earlier-to-later order in time domain is shown in FIG. 25 (b). When the 10 complex-value symbols d0 to d9 are arranged in the y^{∗}f resource elements based on the preset correspondence between a complex-value symbol and a resource elements, arrangement is shown in FIG. 25 (c).

FIG. 25 is an example. In the figure, the y symbols in time domain may be consecutive symbols, or may be discrete symbols, and the f subcarriers in frequency domain may be contiguous subcarriers, or may be discrete subcarriers.

It should be noted that the preset correspondence between a complex-value and a resource element may be preset. For example, the preset correspondence may be a preset matrix, a new coding scheme, or the like. Optionally, if the preset correspondence is a preset matrix, the W complex-value symbols are multiplied by the preset matrix to obtain a sequence of the W complex-value symbols in the y^{∗}f resource elements. If the preset correspondence is a new coding scheme, the W complex-value symbols are recoded according to the new coding scheme, and coded symbols are arranged in the time-domain-before-frequency-domain order or the frequency-domain-before-time-domain order in the y^{∗}f resource elements. This is not limited in this embodiment of the present invention.

Correspondingly, in step 204, the receiving, by a base station, the signal of the resource area 1 sent by the UE is specifically: receiving, by the base station, a signal sent by the UE in each resource area 3 in the first portion of the resource area 3 and a signal sent by the UE in each resource area 3 in the second portion of the resource area.

The first portion of the resource area 3 and the second portion of the resource area 3 in which the base station receives the signals are the same as the first portion of the resource area 3 and the second portion of the resource area 3 onto which the UE maps the complex-value symbols in the foregoing method II. For details, refer to description in the foregoing method II. Details are not described herein in this embodiment of the present invention again.

Further, after the UE determines the resource area 2, when the UE maps the reference signal corresponding to the uplink channel onto the resource area 2 of the UE according to step 202, mapping may be performed by using the following method. The method is specifically described as follows.

Specifically, the UE maps, based on the cyclic shift of the reference signal, the reference signal onto each resource area 4 included in the resource area 2 of the UE. A quantity of the resource area 4 is the same as a quantity of the resource area 3, and one resource area 4 includes d discrete or contiguous subcarriers in c symbols, where c ≤ C, and d ≤ D.

In other words, the resource area 2 of the UE includes at least one resource area 4. A quantity of the at least one resource area 4 is the same as a quantity of the at least one resource area 3, that is, each resource area 3 for sending the W complex-value symbols is corresponding to one resource area 4 for sending the reference signal. The resource area 2 is a general name of the at least one resource area 4. Therefore, when the UE maps the reference signal onto the resource area 2 of the UE, the reference signal needs to be mapped onto each resource area 4 included in the resource area 2 of the UE.

It should be noted that a distribution status of the at least one resource area 4 included in the resource area 2 of the UE in the at least one time-frequency resource unit is similar to a distribution status of the at least one resource area 3 included in the resource area 1 of the UE in the at least one time-frequency resource unit. For details, refer to the foregoing description. Details are not described herein in this embodiment of the present invention again.

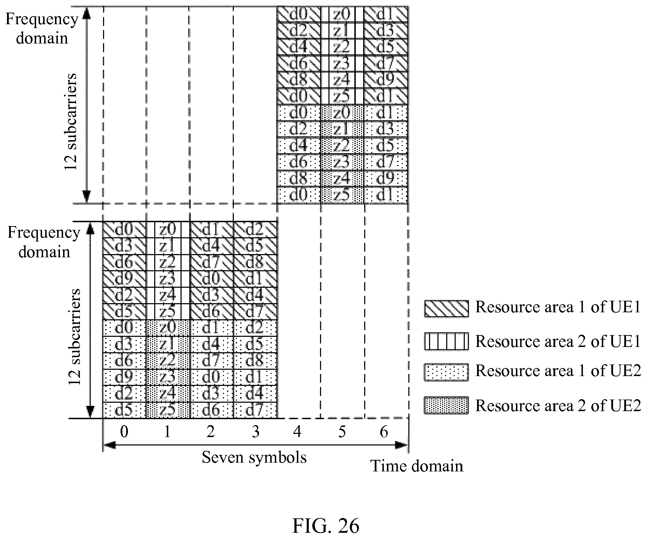

For example, in an example shown in FIG. 19 and FIG. 20 in which the at least one time-frequency resource unit includes two resource blocks, the two resource block are used by the UE1 and the UE2, and the two resource blocks are distributed in the first manner, when each UE maps the reference signal corresponding to the uplink channel onto the resource area 2 corresponding to the UE, and the reference signal is denoted by z0, z1, ..., zn, where n is a positive integer, the at least one time-frequency resource unit after mapping is shown in FIG. 26 to FIG. 29.

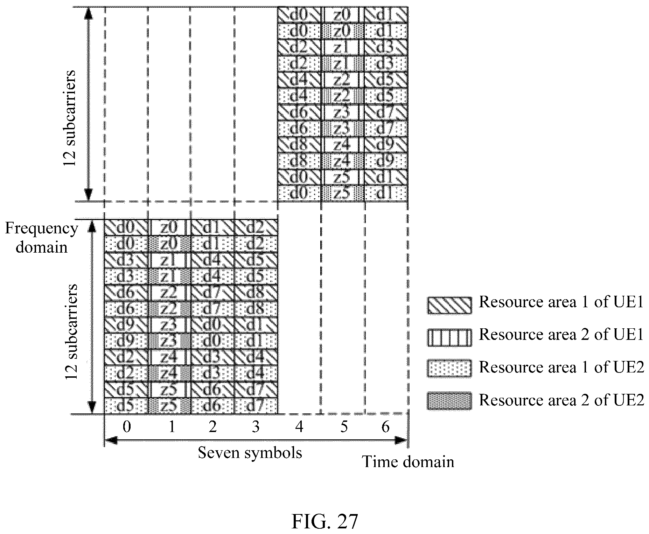

In FIG. 26 or FIG. 27, a subcarrier included in a resource area 1 of each of the UE 1 and the UE 2 is located at a same subcarrier location as a subcarrier included in a resource area 2 of each of the UE1 and the UE2. When each resource area 4 included in the resource area 2 corresponding to each UE is contiguous subcarriers, the at least one time-frequency resource unit after mapping is shown in FIG. 26. When a resource area 4 corresponding to each UE includes discrete subcarriers, the at least one time-frequency resource unit after mapping is shown in FIG. 27.

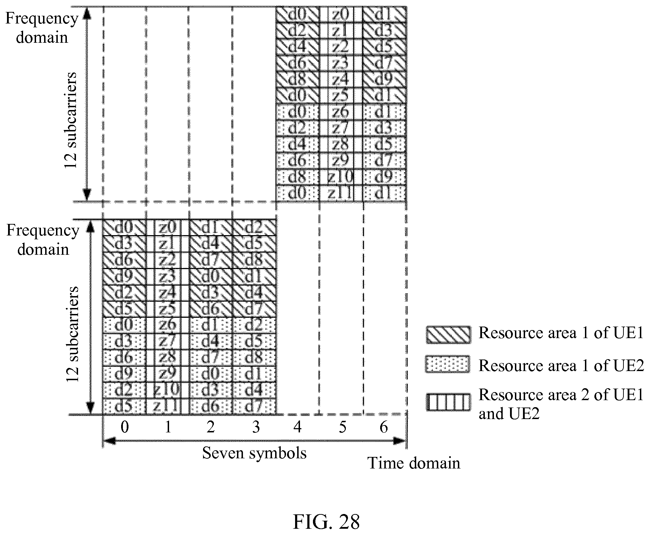

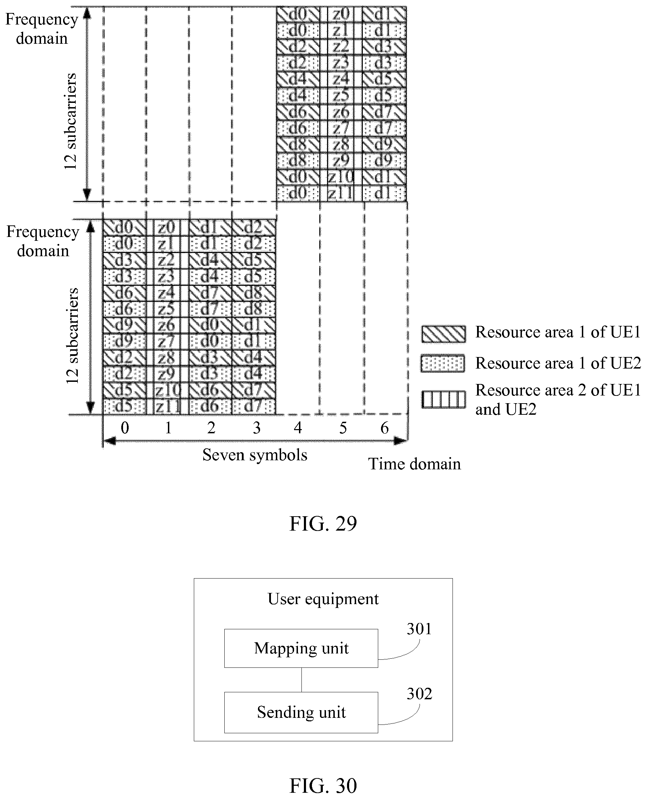

In FIG. 28 and FIG. 29, a subcarrier included in a resource area 1 of each of the UE 1 and the UE 2 is located at a same subcarrier location as some subcarriers included in a resource area 2 of each of the UE1 and the UE2, that is, resource areas 2 of the UE1 and the UE2 are a same resource area. When each resource area 3 included in the resource area 1 of each UE is contiguous subcarriers, the at least one time-frequency resource unit after mapping is shown in FIG. 28. When each resource area 3 included in the resource area 1 of each UE is discrete subcarriers, the at least one time-frequency resource unit after mapping is shown in FIG. 29.

It should be noted that, in FIG. 26 to FIG. 29, an example in which the at one time-frequency resource unit is distributed in the first manner is used to describe the mapping, by the UE, a reference signal corresponding to the uplink channel onto the resource area 2 of the UE. The at least one time-frequency resource unit may alternatively be distributed in the second manner, and when the at least one time-frequency resource unit is distributed in the second manner, a method for mapping the reference signal is similar to a mapping method used when distribution is performed in the first manner. For details, refer to the foregoing description of distribution in the first manner. Details are not described herein in this embodiment of the present invention again.

Further, before the UE maps the reference signal corresponding to the uplink channel onto the resource area 2 of the UE, the method further includes: determining, by the UE, the cyclic shift of the reference signal based on the user identifier of the UE, and/or a start location of a UE subcarrier, and/or an end location of a UE subcarrier. Further, the UE maps the reference signal corresponding to the uplink channel onto the resource area 2 of the UE based on the cyclic shift of the reference signal.

Correspondingly, in step 204, the receiving, by the base station, the signal of the resource area 2 sent by the UE is specifically: receiving, by the base station based on the cyclic shift of the reference signal, a signal of the UE in each resource area 4 included in the resource area 2 of the UE.

The resource area 4 in which the base station receives the signal is the same as a resource area 4 in each resource area 4 onto which the reference signal is mapped by the UE and that is included in the resource area 2. For details, refer to the foregoing description of mapping the reference signal onto each resource area 4 by the UE. Details are not described herein in this embodiment of the present invention again.

According to the transmission method provided in this embodiment of the present invention, after the UE maps the W complex-value symbols of the uplink channel onto the resource area 1 including the F discrete or contiguous subcarriers in the Y symbols, and maps the reference signal corresponding to the uplink channel onto the resource area 2 including the D discrete or contiguous subcarriers in the C symbols, the UE sends the signals of the resource area 1 and the resource area 2, so that the UE can send, by using any quantity of symbols, uplink data carried on the uplink channel, and the at least one time-frequency resource unit is used by at least two UEs in various manners, thereby improving resource utilization and resource use flexibility.

FIG. 30 is a schematic structural diagram of user equipment UE according to an embodiment of the present invention. The user equipment includes a mapping unit 301 and a sending unit 302.

The mapping unit 301 is configured to map W complex-value symbols of an uplink channel onto a resource area 1 of the UE, where the resource area 1 of the UE includes F discrete or contiguous subcarriers in Y symbols.

The mapping unit 301 is further configured to map a reference signal corresponding to the uplink channel onto a resource area 2 of the UE, where the resource area 2 includes D discrete or contiguous subcarriers in C symbols.

The sending unit 302 is configured to send signals of the resource area 1 and the resource area 2.

Optionally, the resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain.

Optionally, when each UE is corresponding to a different subcarrier in frequency domain, a subcarrier spacing corresponding to each UE is the same, and subcarriers of different UEs are spaced apart from each other.

Optionally, a subcarrier included in the resource area 1 is located at a same subcarrier location as a subcarrier included in the resource area 2; or a subcarrier included in the resource area 1 is located at a same subcarrier location as some subcarriers included in the resource area 2.

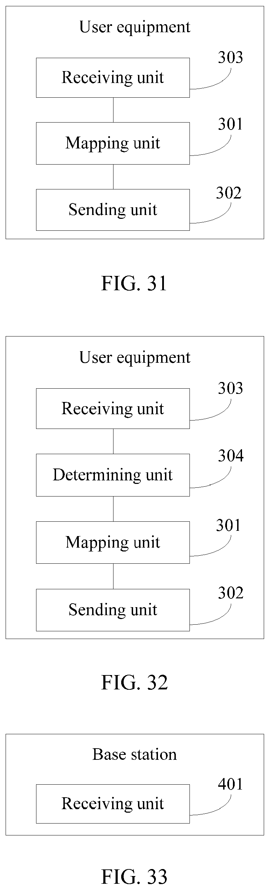

In another embodiment of the present invention, referring to FIG. 31, the user equipment further includes a receiving unit 303.

The receiving unit 303 is configured to receive configuration information sent by a base station, where the configuration information includes at least one of the following: frequency domain location information of the F subcarriers, frequency domain location information of the D subcarriers, a cyclic shift of the reference signal, symbol location information of the Y symbols, and symbol location information of the C symbols.

In another embodiment of the present invention, referring to FIG. 32, the user equipment further includes a determining unit 304.

The determining unit 304 is configured to determine, from K symbols in one transmission time unit, Y symbols for transmitting data and C symbols for transmitting the reference signal, where the K symbols are symbols used for transmitting data and the reference signal in one transmission time unit, and Y + C ≤ K.

The determining unit 304 is further configured to determine the resource area 1 of the UE and the resource area 2 of the UE based on the configuration information.

Optionally, the determining unit 304 is specifically configured to: divide the K symbols into consecutive P symbols and consecutive Q symbols based on a sequence of the K symbols; and separately determine i symbols of the P symbols and i symbols of the Q symbols as symbols for transmitting the reference signal, and determine Q-i symbols of the Q symbols and P-i symbols of the P symbols as symbols for transmitting the data, where Y = P + Q - 2i, C = 2i, and i is an integer greater than or equal to 1.

Optionally, a quantity of the at least one time-frequency resource unit is E, and if E is an even number greater than or equal to 2, contiguous E/2 time-frequency resource units in the at least one time-frequency resource unit are corresponding to the P symbols, and remaining contiguous E/2 time-frequency resource units are corresponding to the Q symbols.

Optionally, a quantity of the at least one time-frequency resource unit is E, and if E is an even number greater than or equal to 2, each of the at least one time-frequency resource unit is corresponding to the K symbols.

In another embodiment of the present invention, the mapping unit 301 is specifically configured to map the W complex-value symbols onto each resource area 3 included in the resource area 1 of the UE.

Each of the at least one time-frequency resource unit includes one resource area 3, one resource area 3 includes f discrete or contiguous subcarriers in y symbols, and the W complex-value symbols are arranged in the y^{∗}f resource elements of the resource area 3 according to a specified rule, where y ≤ Y, and f ≤ F.

In another embodiment of the present invention, the mapping unit 301 is further specifically configured to: divide the W complex-value symbols into consecutive A complex-value symbols and consecutive B complex-value symbols, map the A complex-value symbols to each resource area 3 in a first portion of the resource area 3 and map the B complex-value symbols onto each resource area 3 in a second portion of the resource area.

The first portion of the resource area 3 is corresponding to the P symbols, and the second portion of the resource area 3 is corresponding to the K symbols. Alternatively, the first portion of the resource area 3 and the second portion of the resource area 3 are both corresponding to the K symbols, the first portion of the resource area 3 is located in E/2 time-frequency resource units in the at least one time-frequency resource unit, and the second portion of the resource area 3 is located in remaining contiguous E/2 time-frequency resource units.

Optionally, the arranging according to a specified rule includes: arranging in a time-domain-before-frequency-domain order in the y^{∗}f resource elements, or arranging in a frequency-domain-before-time-domain order in the y^{∗}f resource elements, or arranging in the y^{∗}f resource elements based on a preset correspondence between a complex-value symbol and a resource element.

In another embodiment of the present invention, the mapping unit 301 is further specifically configured to: map, based on the cyclic shift of the reference signal, the reference signal to each resource area 4 included in the resource area 2 of the UE.

A quantity of the resource area 4 is the same as a quantity of the resource area 3, and one resource area 4 includes d discrete or contiguous subcarriers in c symbols, where c ≤ C, and d ≤ D.

In another embodiment of the present invention, the determining unit 304 is further configured to: determine, based on a user identifier of the UE, frequency domain locations of F discrete or contiguous subcarriers included in the resource area 2 of the UE; and/or determine the cyclic shift of the reference signal based on the user identifier of the UE, and/or a start location of a UE subcarrier, and/or an end location of a UE subcarrier.

According to the user equipment UE provided in this embodiment of the present invention, after mapping the W complex-value symbols of the uplink channel onto the resource area 1 including the F discrete or contiguous subcarriers in the Y symbols and mapping the reference signal corresponding to the uplink channel onto the resource area 2 including the D discrete or contiguous subcarriers in the C symbols, the UE sends the signals of the resource area 1 and the resource area 2, so that the UE can send, by using any quantity of symbols, uplink data carried on the uplink channel, thereby improving resource utilization and resource use flexibility.

FIG. 33 is a schematic structural diagram of a base station according to an embodiment of the present invention. As shown in FIG. 33, the base station includes a receiving unit 401.

The receiving unit 401 is configured to receive signals of a resource area 1 and a resource area 2 sent by user equipment UE, where the resource area 1 includes W complex-value symbols of an uplink channel, the resource area 2 includes a reference signal corresponding to the uplink channel, the resource area 1 of the UE includes F discrete or contiguous subcarriers in Y symbols, and the resource area 2 includes D discrete or contiguous subcarriers in C symbols.

Optionally, the resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain.

Optionally, when each UE is corresponding to a different subcarrier in frequency domain, a subcarrier spacing corresponding to each UE is the same, and subcarriers of different UEs are spaced apart from each other.

Optionally, a subcarrier included in the resource area 1 is located at a same subcarrier location as a subcarrier included in the resource area 2; or a subcarrier included in the resource area 1 is located at a same subcarrier location as some subcarriers included in the resource area 2.

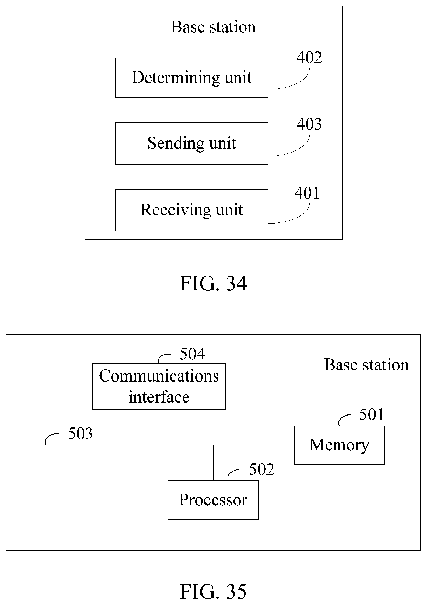

In another embodiment of the present invention, referring to FIG. 34, the base station further includes a determining unit 402 and a sending unit 403.

The determining unit 402 is configured to determine configuration information, where the configuration information includes at least one of the following: frequency domain location information of the F subcarriers, frequency domain location information of the D subcarriers, a cyclic shift of the reference signal, symbol location information of the Y symbols, and symbol location information of the C symbols.

The sending unit 403 is configured to send the configuration information to the UE, so that the UE determines the resource area 1 and the resource area 2 of the UE based on the configuration information.

Optionally, a quantity of the at least one time-frequency resource unit is E, and if E is an even number greater than or equal to 2, contiguous E/2 time-frequency resource units in the at least one time-frequency resource unit are corresponding to the P symbols, and remaining contiguous E/2 time-frequency resource units are corresponding to the Q symbols.

Optionally, a quantity of the at least one time-frequency resource unit is E, and if E is an even number greater than or equal to 2, each of the at least one time-frequency resource unit is corresponding to the K symbols.

In another embodiment of the present invention, the receiving unit 401 is specifically configured to receive a signal of each resource area 3 included in the resource area 1 sent by the UE.

Each of the at least one time-frequency resource unit includes one resource area 3, one resource area 3 includes f discrete or contiguous subcarriers in y symbols, and the W complex-value symbols are arranged in the y^{∗}f resource elements of the resource area 3 according to a specified rule, where y ≤ Y, and f ≤ F.

In another embodiment of the present invention, the receiving unit 401 is further specifically configured to: receive a signal sent by the UE in each resource area 3 in a first portion of the resource area 3 and a signal sent by the UE in each resource area 3 in a second portion of the resource area. The first portion of the resource area 3 includes A complex-value symbols, and the second portion of the resource area 3 includes B complex-value symbols, where A + B = W.

The first portion of the resource area 3 is corresponding to the P symbols, and the second portion of the resource area 3 is corresponding to the Q symbols. Alternatively, the first portion of the resource area 3 and the second portion of the resource area 3 are both corresponding to the K symbols, the first portion of the resource area 3 is located in E/2 time-frequency resource units in the at least one time-frequency resource unit, and the second portion of the resource area 3 is located in remaining E/2 time-frequency resource units. Optionally, the arranging according to a specified rule includes: arranging in a time-domain-before-frequency-domain order in the y^{∗}f resource elements, or arranging in a frequency-domain-before-time-domain order in the y^{∗}f resource elements, or arranging in the y^{∗}f resource elements based on a preset correspondence between a complex-value symbol and a resource element.

In another embodiment of the present invention, the receiving unit 401 is further specifically configured to receive, based on the cyclic shift of the reference signal, a signal of the UE in each resource area 4 included in the resource area 2.

A quantity of the resource area 4 is the same as a quantity of the resource area 3, and one resource area 4 includes d discrete or contiguous subcarriers in c symbols, where c ≤ C, and d ≤ D.

In another embodiment of the present invention, the determining unit 402 is further configured to:
determine, based on a user identifier of the UE, frequency domain locations of the F discrete or contiguous subcarriers included in the resource area 2 of the UE; and/or
determine the cyclic shift of the reference signal based on the user identifier of the UE, and/or a start location of a UE subcarrier, and/or an end location of a UE subcarrier.

According to the base station provided in this embodiment of the present invention, the base station receives the signals of the resource area 1 and the resource area 2 sent by the UE, where a signal of the resource area 1 includes the W complex-value symbols of the uplink channel, a signal of the resource area 2 includes the reference signal corresponding to the uplink channel, the resource area 1 of the UE includes the F discrete or contiguous subcarriers in the Y symbols, and the resource area 2 includes the D discrete or contiguous subcarriers in the C symbols. Therefore, the UE may send, by using any quantity of symbols, uplink data carried on the uplink channel, thereby improving resource utilization and resource use flexibility.

An embodiment of the present invention provides user equipment. The user equipment is shown in FIG. 5, and includes a memory 121, a processor 122, an RF (Radio Frequency, radio frequency) circuit 123, a power supply 124, and another component. The memory 121 stores code and data. The processor 122 runs the code in the memory 121, so that the user equipment executes steps performed by the user equipment in the embodiment of the transmission method shown in FIG. 6 or FIG. 14.

According to the user equipment UE provided in this embodiment of the present invention, after mapping W complex-value symbols of an uplink channel onto the resource area 1 including F discrete or contiguous subcarriers in the Y symbols and mapping a reference signal corresponding to the uplink channel onto the resource area 2 including D discrete or contiguous subcarriers in the C symbols, the UE sends signals of the resource area 1 and the resource area 2, so that the UE can send, by using any quantity of symbols, uplink data carried on the uplink channel, thereby improving resource utilization and resource use flexibility.

FIG. 35 is a schematic structural diagram of a base station according to an embodiment of the present invention. Referring to FIG. 35, the base station includes a memory 501, a processor 502, a system bus 503, and a communications interface 504. The memory 501 stores code and data. The processor 502 is connected to the memory 501 by using the system bus 503. The processor 502 runs the code in the memory 501, so that the base station executes steps performed by the base station in the embodiment of the transmission method shown in FIG. 6 or FIG. 14.

According to the base station provided in this embodiment of the present invention, the base station receives signals of a resource area 1 and a resource area 2 sent by the UE, where the resource area 1 includes W complex-value symbols of an uplink channel, the resource area 2 includes a reference signal corresponding to the uplink channel, the resource area 1 of the UE includes F discrete or contiguous subcarriers in Y symbols and the resource area 2 includes D discrete or contiguous subcarriers in C symbols. Therefore, the UE may send, by using any quantity of symbols, uplink data carried on the uplink channel, thereby improving resource utilization and resource use flexibility.

## Claims

1. A transmission method, applied to a user equipment, UE, wherein the method comprises:
mapping (201), by the UE, W complex-value symbols of an uplink channel onto a resource area 1 of the UE, wherein the resource area 1 of the UE comprises F discrete or contiguous subcarriers in Y symbols;
mapping (202) a reference signal used for uplink channel estimation onto a resource area 2 of the UE, wherein the resource area 2 comprises D discrete or contiguous subcarriers in C symbols; and
sending (203), by the UE, signals of the resource area 1 and the resource area 2,
wherein before the mapping W complex-value symbols onto a resource area 1 of the UE, the method further includes: determining, from K symbols in one transmission time unit, Y symbols for transmitting data and C symbols for transmitting the reference signal, where the K symbols are symbols used for transmitting data and the reference signal in one transmission time unit, and Y + C ≤ K; and determining the resource area 1 of the UE and the resource area 2 of the UE based on the configuration information.

2. The method according to claim 1, wherein the resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain.

3. The method according to claim 2, wherein when each UE is corresponding to a different subcarrier in frequency domain, a subcarrier spacing corresponding to each UE is the same, and subcarriers of different UEs are spaced apart from each other.

4. The method according to claim 2 or 3, wherein a subcarrier comprised in the resource area 1 is located at a same subcarrier location as a subcarrier comprised in the resource area 2; or a subcarrier comprised in the resource area 1 is located at a same subcarrier location as some subcarriers comprised in the resource area 2.

5. The method according to any one of claims 1 to 4, wherein before the mapping W complex-value symbols onto a resource area 1 of the UE, the method further comprises:
receiving configuration information sent by a base station, wherein the configuration information comprises at least one of the following: frequency domain location information of the F subcarriers, frequency domain location information of the D subcarriers, a cyclic shift of the reference signal, symbol location information of the Y symbols, and symbol location information of the C symbols.

6. A user equipment, UE, wherein the UE comprises:
a mapping unit (301), configured to map W complex-value symbols of an uplink channel onto a resource area 1 of the UE, wherein the resource area 1 of the UE comprises F discrete or contiguous subcarriers in Y symbols, and map a reference signal used for uplink channel estimation onto a resource area 2 of the UE, wherein the resource area 2 comprises D discrete or contiguous subcarriers in C symbols; and
a sending unit (302), configured to send signals of the resource area 1 and the resource area 2,
wherein the mapping unit is configured to, perform mapping W complex-value symbols onto a resource area 1 of the UE, determine from K symbols in one transmission time unit, Y symbols for transmitting data and C symbols for transmitting the reference signal, where the K symbols are symbols used for transmitting data and the reference signal in one transmission time unit, and Y + C ≤ K; and determining the resource area 1 of the UE and the resource area 2 of the UE based on the configuration information signal, where the K symbols are symbols.

7. The user equipment according to claim 6, wherein the resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain.

8. The user equipment according to claim 7, wherein when each UE is corresponding to a different subcarrier in frequency domain, a subcarrier spacing corresponding to each UE is the same, and subcarriers of different UEs are spaced apart from each other.

9. The user equipment according to claim 7 or 8, wherein a subcarrier comprised in the resource area 1 is located at a same subcarrier location as a subcarrier comprised in the resource area 2; or a subcarrier comprised in the resource area 1 is located at a same subcarrier location as some subcarriers comprised in the resource area 2.

10. The user equipment according to any one of claims 6 to 9, wherein the user equipment further comprises:
a receiving unit (303), configured to receive configuration information sent by a base station, wherein the configuration information comprises at least one of the following: frequency domain location information of the F subcarriers, frequency domain location information of the D subcarriers, a cyclic shift of the reference signal, symbol location information of the Y symbols, and symbol location information of the C symbols.

11. A base station, wherein the base station comprises:
a receiving unit (401), configured to receive signals of a resource area 1 and a resource area 2 sent by a user equipment, UE, wherein a signal of the resource area 1 comprises W complex-value symbols of an uplink channel, a signal of the resource area 2 comprises a reference signal corresponding to the uplink channel, the resource area 1 of the UE comprises F discrete or contiguous subcarriers in Y symbols, and the resource area 2 comprises D discrete or contiguous subcarriers in C symbols.

12. The base station according to claim 11, wherein the resource area 1 and/or the resource area 2 of the UE are/is located in at least one time-frequency resource unit, the at least one time-frequency resource unit is used by at least two UEs, and each of the at least two UEs is corresponding to a different symbol in time domain, and/or each UE is corresponding to a different subcarrier in frequency domain.

13. The base station according to claim 12, wherein when each UE is corresponding to a different subcarrier in frequency domain, a subcarrier spacing corresponding to each UE is the same, and subcarriers of different UEs are spaced apart from each other.

14. The base station according to claim 12 or 13, wherein a subcarrier comprised in the resource area 1 is located at a same subcarrier location as a subcarrier comprised in the resource area 2; or a subcarrier comprised in the resource area 1 is located at a same subcarrier location as some subcarriers comprised in the resource area 2.

15. The base station according to any one of claims 12 to 14, wherein the base station further comprises:
a determining unit (402), configured to determine configuration information, wherein the configuration information comprises at least one of the following: frequency domain location information of the F subcarriers, frequency domain location information of the D subcarriers, a cyclic shift of the reference signal, symbol location information of the Y symbols, and symbol location information of the C symbols; and
a sending unit (403), configured to send the configuration information to the UE, so that the UE determines the resource area 1 and the resource area 2 of the UE based on the configuration information.

## Patentansprüche

1. Übertragungsverfahren, angewendet auf eine Benutzereinrichtung (user equipment - UE), wobei das Verfahren Folgendes umfasst:
Zuordnen (201), durch die UE, von W komplexwertigen Symbolen eines Uplink-Kanals zu einem Ressourcenbereich 1 der UE, wobei der Ressourcenbereich 1 der UE F diskrete oder zusammenhängende Unterträger in Y Symbolen umfasst;
Zuordnen (202) eines Referenzsignals, das für die Uplink-Kanalschätzung verwendet wird, zu einem Ressourcenbereich 2 der UE, wobei der Ressourcenbereich 2 D diskrete oder zusammenhängende Unterträger in C Symbolen umfasst; und
Senden (203), durch die UE, von Signalen des Ressourcenbereichs 1 und des Ressourcenbereichs 2,
wobei vor dem Zuordnen von W komplexwertigen Symbolen zu einem Ressourcenbereich 1 der UE, das Verfahren ferner Folgendes beinhaltet: Bestimmen, aus K Symbolen in einer Übertragungszeiteinheit, von Y Symbolen zum Übertragen von Daten und C Symbolen zum Übertragen des Referenzsignals, wobei die K Symbole Symbole sind, die zum Übertragen von Daten und des Referenzsignals in einer Übertragungszeiteinheit verwendet werden, und Y + C ≤ K; und Bestimmen des Ressourcenbereichs 1 der UE und des Ressourcenbereichs 2 der UE basierend auf den Konfigurationsinformationen.

2. Verfahren nach Anspruch 1, wobei sich der Ressourcenbereich 1 und/oder der Ressourcenbereich 2 der UE in wenigstens einer Zeitfrequenzressourceneinheit befinden/befindet, die wenigstens eine Zeitfrequenzressourceneinheit durch wenigstens zwei UEs verwendet wird und jede der wenigstens zwei UEs einem verschiedenen Symbol in einer Zeitdomäne entspricht und/oder jede UE einem verschiedenen Unterträger in einer Frequenzdomäne entspricht.

3. Verfahren nach Anspruch 2, wobei, wenn jede UE einem verschiedenen Unterträger in der Frequenzdomäne entspricht, ein Unterträgerabstand, der jeder UE entspricht, der gleiche ist und Unterträger verschiedener UEs voneinander beabstandet sind.

4. Verfahren nach Anspruch 2 oder 3, wobei sich ein Unterträger, der in dem Ressourcenbereich 1 enthalten ist, an einem gleichen Unterträgerort befindet wie ein Unterträger, der in dem Ressourcenbereich 2 enthalten ist; oder sich ein Unterträger, der in dem Ressourcenbereich 1 enthalten ist, an einem gleichen Unterträgerort befindet wie einige Unterträger, die in dem Ressourcenbereich 2 enthalten sind.

5. Verfahren nach einem der Ansprüche 1 bis 4, wobei vor dem Zuordnen von W komplexwertigen Symbolen zu einem Ressourcenbereich 1 der UE das Verfahren ferner Folgendes umfasst:
Empfangen von Konfigurationsinformationen, die durch eine Basisstation gesendet werden, wobei die Konfigurationsinformationen Folgendes umfassen: Frequenzdomänenortinformationen der F Unterträger, Frequenzdomänenortinformationen der D Unterträger, eine zyklische Verschiebung des Referenzsignals, Symbolortinformationen der Y Symbole und/oder Symbolortinformationen der C Symbole.

6. Benutzereinrichtung (UE), wobei die UE Folgendes umfasst:
eine Zuordnungseinheit (301), die konfiguriert ist, um W komplexwertige Symbole eines Uplink-Kanals zu einem Ressourcenbereich 1 der UE zuzuordnen, wobei der Ressourcenbereich 1 der UE F diskrete oder zusammenhängende Unterträger in Y Symbolen umfasst, und ein Referenzsignal, das für eine Uplink-Kanalschätzung verwendet wird, zu einem Ressourcenbereich 2 der UE zuzuordnen, wobei der Ressourcenbereich 2 D diskrete oder zusammenhängende Unterträger in C Symbolen umfasst; und
eine Sendeeinheit (302), die konfiguriert ist, um Signale des Ressourcenbereichs 1 und des Ressourcenbereichs 2 zu senden,
wobei die Zuordnungseinheit konfiguriert ist, um das Zuordnen von W komplexwertigen Symbolen zu einem Ressourcenbereich 1 der UE durchzuführen, aus K Symbolen in einer Übertragungszeiteinheit Y Symbole zum Übertragen von Daten und C Symbole zum Übertragen des Referenzsignals zu bestimmen, wobei die K Symbole Symbole sind, die zum Übertragen von Daten und des Referenzsignals in einer Übertragungszeiteinheit verwendet werden, und Y + C ≤ K; und Bestimmen des Ressourcenbereichs 1 der UE und des Ressourcenbereichs 2 der UE basierend auf dem Konfigurationsinformationssignal, wobei die K Symbole Symbole sind.

7. Benutzereinrichtung nach Anspruch 6, wobei sich der Ressourcenbereich 1 und/oder der Ressourcenbereich 2 der UE in wenigstens einer Zeitfrequenzressourceneinheit befinden/befindet, die wenigstens eine Zeitfrequenzressourceneinheit durch wenigstens zwei UEs verwendet wird und jede der wenigstens zwei UEs einem verschiedenen Symbol in der Zeitdomäne entspricht und/oder jede UE einem verschiedenen Unterträger in der Frequenzdomäne entspricht.

8. Benutzereinrichtung nach Anspruch 7, wobei, wenn jede UE einem verschiedenen Unterträger in der Frequenzdomäne entspricht, ein Unterträgerabstand, der jeder UE entspricht, der gleiche ist und Unterträger verschiedener UEs voneinander beabstandet sind.

9. Benutzereinrichtung nach Anspruch 7 oder 8, wobei sich ein Unterträger, der in dem Ressourcenbereich 1 enthalten ist, an einem gleichen Unterträgerort befindet wie ein Unterträger, der in dem Ressourcenbereich 2 enthalten ist; oder sich ein Unterträger, der in dem Ressourcenbereich 1 enthalten ist, an einem gleichen Unterträgerort befindet wie einige Unterträger, die in dem Ressourcenbereich 2 enthalten sind.

10. Benutzereinrichtung nach einem der Ansprüche 6 bis 9, wobei die Benutzereinrichtung ferner Folgendes umfasst:
eine Empfangseinheit (303), die konfiguriert ist, um Konfigurationsinformationen, die durch eine Basisstation gesendet werden, zu empfangen, wobei die Konfigurationsinformationen Folgendes umfassen: Frequenzdomänenortinformationen der F Unterträger, Frequenzdomänenortinformationen der D Unterträger, eine zyklische Verschiebung des Referenzsignals, Symbolortinformationen der Y Symbole und/oder Symbolortinformationen der C Symbole.

11. Basisstation, wobei die Basisstation Folgendes umfasst:
eine Empfangseinheit (401), die konfiguriert ist, um Signale eines Ressourcenbereichs 1 und eines Ressourcenbereichs 2 zu empfangen, die durch eine Benutzereinrichtung (UE) gesendet werden, wobei ein Signal des Ressourcenbereichs 1 W komplexwertige Symbole eines Uplink-Kanals umfasst, ein Signal des Ressourcenbereichs 2 ein Referenzsignal, das dem Uplink-Kanal entspricht, umfasst, der Ressourcenbereich 1 der UE F diskrete oder zusammenhängende Unterträger in Y Symbolen umfasst und der Ressourcenbereich 2 D diskrete oder zusammenhängende Unterträger in C Symbolen umfasst.

12. Basisstation nach Anspruch 11, wobei sich der Ressourcenbereich 1 und/oder der Ressourcenbereich 2 der UE in wenigstens einer Zeitfrequenzressourceneinheit befinden/befindet, die wenigstens eine Zeitfrequenzressourceneinheit durch wenigstens zwei UEs verwendet wird und jede der wenigstens zwei UEs einem verschiedenen Symbol in der Zeitdomäne entspricht und/oder jede UE einem verschiedenen Unterträger in der Frequenzdomäne entspricht.

13. Basisstation nach Anspruch 12, wobei, wenn jede UE einem verschiedenen Unterträger in der Frequenzdomäne entspricht, ein Unterträgerabstand, der jeder UE entspricht, der gleiche ist und Unterträger verschiedener UEs voneinander beabstandet sind.

14. Basisstation nach Anspruch 12 oder 13, wobei sich ein Unterträger, der in dem Ressourcenbereich 1 enthalten ist, an einem gleichen Unterträgerort befindet wie ein Unterträger, der in dem Ressourcenbereich 2 enthalten ist; oder sich ein Unterträger, der in dem Ressourcenbereich 1 enthalten ist, an einem gleichen Unterträgerort befindet wie einige Unterträger, die in dem Ressourcenbereich 2 enthalten sind.

15. Basisstation nach einem der Ansprüche 12 bis 14, wobei die Basisstation ferner Folgendes umfasst:
eine Bestimmungseinheit (402), die konfiguriert ist, um Konfigurationsinformationen zu bestimmen, wobei die Konfigurationsinformationen Folgendes umfassen: Frequenzdomänenortinformationen der F Unterträger, Frequenzdomänenortinformationen der D Unterträger, eine zyklische Verschiebung des Referenzsignals, Symbolortinformationen der Y Symbole und/oder Symbolortinformationen der C Symbole; und
eine Sendeeinheit (403), die konfiguriert ist, um die Konfigurationsinformationen an die UE zu senden, so dass die UE den Ressourcenbereich 1 und den Ressourcenbereich 2 der UE basierend auf den Konfigurationsinformationen bestimmt.

## Revendications

1. Procédé de transmission, appliqué à un équipement utilisateur, UE, dans lequel le procédé comprend :
le mappage (201), par l'UE, de W symboles de valeur complexe d'un canal de liaison montante sur une zone de ressources 1 de l'UE, la zone de ressources 1 de l'UE comprenant F sous-porteuses discrètes ou contiguës en Y symboles ;
le mappage (202) d'un signal de référence utilisé pour l'estimation de canal de liaison montante sur une zone de ressources 2 de l'UE, la zone de ressources 2 comprenant D sous-porteuses discrètes ou contiguës en C symboles ; et
l'envoi (203), par l'UE, des signaux de la zone de ressources 1 et de la zone de ressources 2,
avant le mappage de W symboles de valeur complexe sur une zone de ressources 1 de l'UE, le procédé comportant en outre : la détermination, à partir de K symboles dans une unité de temps de transmission, de Y symboles pour transmettre des données et de C symboles pour transmettre le signal de référence, où les symboles K sont des symboles utilisés pour transmettre des données et le signal de référence dans une unité de temps de transmission, et Y + C ≤ K ; et la détermination de la zone de ressources 1 de l'UE et de la zone de ressources 2 de l'UE sur la base des informations de configuration.

2. Procédé selon la revendication 1, dans lequel la zone de ressources 1 et/ou la zone de ressources 2 de l'UE est/sont située(s) dans au moins une unité de ressources temps-fréquence, l'au moins une unité de ressources temps-fréquence est utilisée par au moins deux UE, et chacun des au moins deux UE correspond à un symbole différent dans le domaine temporel, et/ou chaque UE correspond à une sous-porteuse différente dans le domaine de fréquence.

3. Procédé selon la revendication 2, dans lequel lorsque chaque UE correspond à une sous-porteuse différente dans le domaine de fréquence, un espacement de sous-porteuses correspondant à chaque UE est identique, et les sous-porteuses d'UE différents sont espacées les unes des autres.

4. Procédé selon la revendication 2 ou 3, dans lequel une sous-porteuse comprise dans la zone de ressources 1 est située au même emplacement de sous-porteuse qu'une sous-porteuse comprise dans la zone de ressources 2 ; ou une sous-porteuse comprise dans la zone de ressources 1 est située au même emplacement de sous-porteuse que certaines sous-porteuses comprises dans la zone de ressources 2.

5. Procédé selon l'une quelconque des revendications 1 à 4, dans lequel avant le mappage de W symboles de valeur complexe sur une zone de ressources 1 de l'UE, le procédé comprend en outre :
la réception d'informations de configuration envoyées par une station de base, les informations de configuration comprenant : des informations de localisation de domaine de fréquence des F sous-porteuses et/ou des informations de localisation de domaine de fréquence des D sous-porteuses et/ou un décalage cyclique du signal de référence et/ou des informations de localisation de symbole des symboles Y et/ou des informations d'emplacement de symbole des symboles C.

6. Équipement utilisateur, UE, dans lequel l'UE comprend :
une unité de mappage (301), configurée pour mapper W symboles de valeur complexe d'un canal de liaison montante sur une zone de ressources 1 de l'UE, la zone de ressources 1 de l'UE comprenant F sous-porteuses discrètes ou contiguës en Y symboles, et pour mapper un signal de référence utilisé pour l'estimation de canal de liaison montante sur une zone de ressources 2 de l'UE, la zone de ressources 2 comprenant D sous-porteuses discrètes ou contiguës en C symboles ; et
une unité d'envoi (302), configurée pour envoyer des signaux de la zone de ressources 1 et de la zone de ressources 2,
l'unité de mappage étant configurée pour effectuer le mappage de W symboles de valeur complexe sur une zone de ressources 1 de l'UE, déterminer, à partir de K symboles dans une unité de temps de transmission, Y symboles pour transmettre des données et C symboles pour transmettre le signal de référence, où les K symboles sont des symboles utilisés pour transmettre des données et le signal de référence dans une unité de temps de transmission, et Y + C ≤ K ; et la détermination de la zone de ressources 1 de l'UE et de la zone de ressources 2 de l'UE sur la base du signal d'informations de configuration, où les K symboles sont des symboles.

7. Équipement utilisateur selon la revendication 6, dans lequel la zone de ressources 1 et/ou la zone de ressources 2 de l'UE est/sont située(s) dans au moins une unité de ressources temps-fréquence, l'au moins une unité de ressources temps-fréquence est utilisée par au moins deux UE, et chacun des au moins deux UE correspond à un symbole différent dans le domaine temporel, et/ou chaque UE correspond à une sous-porteuse différente dans le domaine de fréquence.

8. Équipement utilisateur selon la revendication 7, dans lequel lorsque chaque UE correspond à une sous-porteuse différente dans le domaine de fréquence, un espacement de sous-porteuses correspondant à chaque UE est identique, et les sous-porteuses d'UE différents sont espacées les unes des autres.

9. Équipement utilisateur selon la revendication 7 ou 8, dans lequel une sous-porteuse comprise dans la zone de ressources 1 est située au même emplacement de sous-porteuse qu'une sous-porteuse comprise dans la zone de ressources 2 ; ou une sous-porteuse comprise dans la zone de ressources 1 est située au même emplacement de sous-porteuse que certaines sous-porteuses comprises dans la zone de ressources 2.

10. Équipement utilisateur selon l'une quelconque des revendications 6 à 9, dans lequel l'équipement utilisateur comprend en outre :
une unité de réception (303), configurée pour recevoir des informations de configuration envoyées par une station de base, les informations de configuration comprenant : des informations de localisation de domaine de fréquence des F sous-porteuses et/ou des informations de localisation de domaine de fréquence des D sous-porteuses et/ou décalage cyclique du signal de référence et/ou des informations de localisation de symbole des symboles Y et/ou des informations de localisation de symbole des symboles C.

11. Station de base, dans laquelle la station de base comprend :
une unité de réception (401), configurée pour recevoir des signaux d'une zone de ressources 1 et d'une zone de ressources 2 envoyés par un équipement utilisateur, UE, un signal de la zone de ressources 1 comprenant W symboles de valeur complexe d'un canal de liaison montante, un signal de la zone de ressources 2 comprenant un signal de référence correspondant au canal de liaison montante, la zone de ressources 1 de l'UE comprend F sous-porteuses discrètes ou contiguës en Y symboles, et la zone de ressources 2 comprenant D sous-porteuses discrètes ou contiguës en C symboles.

12. Station de base selon la revendication 11, dans laquelle la zone de ressources 1 et/ou la zone de ressources 2 de l'UE est/sont située(s) dans au moins une unité de ressources temps-fréquence, l'au moins une unité de ressources temps-fréquence est utilisée par au moins deux UE, et chacun des au moins deux UE correspond à un symbole différent dans le domaine temporel, et/ou chaque UE correspond à une sous-porteuse différente dans le domaine de fréquence.

13. Station de base selon la revendication 12, dans laquelle lorsque chaque UE correspond à une sous-porteuse différente dans le domaine de fréquence, un espacement de sous-porteuses correspondant à chaque UE est identique, et des sous-porteuses d'UE différents sont espacées les unes des autres.

14. Station de base selon la revendication 12 ou 13, dans laquelle une sous-porteuse comprise dans la zone de ressources 1 est située au même emplacement de sous-porteuse qu'une sous-porteuse comprise dans la zone de ressources 2 ; ou une sous-porteuse comprise dans la zone de ressources 1 est située au même emplacement de sous-porteuse que certaines sous-porteuses comprises dans la zone de ressources 2.

15. Station de base selon l'une quelconque des revendications 12 à 14, dans laquelle la station de base comprend en outre :
une unité de détermination (402), configurée pour déterminer des informations de configuration, les informations de configuration comprenant : des informations de localisation de domaine de fréquence des F sous-porteuses et/ou des informations de localisation de domaine de fréquence des D sous-porteuses et/ou un décalage cyclique du signal de référence et/ou des informations de localisation de symbole des symboles Y et/ou des informations de localisation de symbole des symboles C ; et
une unité d'envoi (403), configurée pour envoyer les informations de configuration à l'UE, de sorte que l'UE détermine la zone de ressources 1 et la zone de ressources 2 de l'UE sur la base des informations de configuration.
